# EUROPEAN PATENT SPECIFICATION

(11) **EP 1 025 560 B1**
(45) Date of publication and mention of the grant of the patent: **17.08.2005**
(21) Application number: 97929693.6
(22) Date of filing: 05.06.1997
(51) Int. Cl.: G11B 3/00, G11B 3/90, G11B 5/027, G11B 5/09, G11B 7/00, G11B 7/24, G11B 7/26, G11B 17/22, G11B 19/12, G11B 19/04, G11B 23/28, G11B 23/00

(54) **COPY PROTECTABLE OPTICAL MEDIA DEVICE AND METHODOLOGY THEREFOR**
OTPISCHES MEDIUM MIT KOPIERSCHUTZ UND DAZUGEHÖRIGES VERFAHREN
DISPOSITIF SUPPORT OPTIQUE POUVANT ETRE PROTEGE CONTRE LA COPIE, ET METHODOLOGIE ASSOCIEE

(30) Priority: 14.03.1997 US 40724 P
(43) Date of publication of application: 09.08.2000
(73) Proprietor: Hide and Seek Technologies, Inc., Jenks, OK 74037 (US)
(72) Inventor: MCLAUGHLIN, Mark, Baton Rouge, LA 70808 (US); LACKRITZ, Hilary, S., Half-Moon Bay, CA 94019 (US); SMITH, Jerry, Littleton, CO 80123 (US); WELDON, James, Nederland, CO 80466 (US); MERRY, J., Bradford, Annapolis, MD 21403 (US); SCHNECK, Carl, R., Jr., Milford, PA 18337 (US)
(74) Representative: Haines, Miles John
(86) International application number: PCT/US1997/008842
(87) International publication number: WO 1998/041979

(56) References cited:
- EP-A- 0 660 313
- US-A- 4 677 604
- US-A- 5 400 319
- US-A- 5 538 773
- US-A- 5 587 984
- US-A- 5 608 717
- US-A- 5 661 703
- US-A- 5 671 202
- PATENT ABSTRACTS OF JAPAN vol. 016, no. 393 (P-1406), 20 August 1992 (1992-08-20) -& JP 04 128834 A (TOPPAN PRINTING CO LTD), 30 April 1992 (1992-04-30)
- PATENT ABSTRACTS OF JAPAN vol. 015, no. 356 (P-1249), 9 September 1991 (1991-09-09) -& JP 03 137634 A (DAINIPPON INK & CHEM INC), 12 June 1991 (1991-06-12)
- PATENT ABSTRACTS OF JAPAN vol. 017, no. 147 (P-1508), 24 March 1993 (1993-03-24) -& JP 04 318342 A (CANON INC), 9 November 1992 (1992-11-09)
- PATENT ABSTRACTS OF JAPAN vol. 010, no. 022 (P-424), 28 January 1986 (1986-01-28) -& JP 60 175254 A (NORITAKA KAWAOKA), 9 September 1985 (1985-09-09)
- TARKKA R M ET AL: "HOLOGRAPHIC STORAGE IN A NEAR-IR SENSITIVE PHOTOCHROMIC DYE" OPTICS COMMUNICATIONS, NORTH-HOLLAND PUBLISHING CO. AMSTERDAM, NL, vol. 109, no. 1/2, 15 June 1994 (1994-06-15), pages 54-58, XP000445924 ISSN: 0030-4018

## Description

### FIELD OF INVENTION

The present invention broadly relates to data storage media for use with optical scanning machines, which data storage media are adapted to limit access to information stored thereon. More particularly, the present invention concerns optical disks for use in an optical readout system of a computer to limit continual or repeated unrestricted access to stored data by the optical readout system. A method is also provided for limiting access to data stored in an optical medium environment.

### BACKGROUND OF THE INVENTION

The computer industry has long been plagued by the illegal misappropriation of software products. The Software Publisher's Association (SPA), an organization with devotes significant resources to tracking and analyzing piracy problems, has determined that in 1994 alone the personal computer software industry lost in excess of $8 billion due to illegal copying of business application software. The SPA further estimated that virtually half of the business software in use in 1994 was pirated, and this estimate does not include the illegal copying of operating systems, education, entertainment or personal productivity software. The piracy problem is particularly acute in more developed markets such as the United States.

Many approaches have been implemented by software producers in an effort to combat piracy. Some of these approaches include encryption, special data formatting complex installation procedures, and passwords, to name only a few. Unfortunately, end user resistance to these anti-piracy schemes has been high because they are plagued by one or more limitations, such as an inability to "try before you buy", restrictions on the generation of legitimate back-up copies, and password protection techniques which fail once the password is divulged or discovered. The inability of copy protection schemes to win end-user acceptance has been so extreme that many publishers have simply abandoned the effort, choosing instead to rely on the integrity of their customers to abide by copyright laws.

The misappropriation of software is rampant irrespective of whether the data storage medium is magnetic or optical. Magnetic storage disks are particularly susceptible to piracy. Commercially available magnetic disks, such as the conventional floppy disk, are read/write/erase memory devices in which data is stored in a magnetizable surface layer as discrete patterns of magnetism. Information is stored and retrieved by a read/write head which contains a coil wound around an iron core.

While the magnetic recording medium remains the most popular, there has been a growing trend in recent years to utilize an optical medium environment for the storage and retrieval of data. The reason for this trend is readily apparent. A commercially available magnetic floppy disk is only capable of storing 1.44Mb of data, whereas an optical CD-ROM of the same size can have a capacity in excess of 600Mb.

In a typical optical disk for use in a computer's optical readout system, data is stored as a series of lands and pits. This is accomplished by stamping along spiral tracks on a transparent plastic disk, overlaying this with a reflective coating, and thereafter superimposing a protective layer over this coating. Light from a semiconductor laser is focused onto either the lands or pits from below and the reflected light impinges upon a photodetector which converts the presence or absence of the pits into a binary electrical signal. Because the focused laser spot is so minute, the amount of information that can be stored onto the surface of the disk is immense. Adjacent tracks need only be spaced apart by approximately .6pm and, hence, 20,000 tracks may be available on a conventional 120 mm diameter (5 inch) optical disk. The electrical signals delivered to the optical readout system correspond to the magnitude of the reflected light which either increases or decreases due to interference and/or diffraction by the preformatted data structures.

In the 1970's, researchers began attempting to encode information on optical disks with lasers, and the video disk was subsequently developed. In the 1980's, more sensitive materials that could be encoded with a low power diode laser were developed. These diode lasers, operating at a wavelength of approximately 800 nm, are now universally employed to read audio and computer CD's. Following the advent of compact disks which are capable of being read with a laser diode, researchers have now endeavored to develop a marketable compact disk upon which data can be recorded by an end user. The benefit of this capability, as discussed above, is that optical laser recording provides a much higher information density than magnetic recording.

Presently, there is a write once and read many times (WORM) compact disk. This compact disk utilizes a dye that irreversibly changes state when exposed to a high power laser diode and maintains this state when read with a low power reading laser. As such, detection of the encoded data by the optical readout system does not affect the encoded data.

It is anticipated that the next generation of optical disks will be capable of being written on, read, erased and rewritten on, etc. many times, similar to a magnetic disk. A photochromic material, or chromophore, is attractive for this purpose. Photochromism is the phenomenon whereby the absorption spectrum of a molecule or crystal changes reversibly when the material is irradiated by light possessing certain wavelengths. Thus, for example, a colorless compound may change its molecular state to a quasi-stable colored state when radiated by ultraviolet (UV) light, yet be returned to the colorless state upon exposure to visible light. Both organic and inorganic materials which exhibit these properties have been known for years.

Recently, photochromic compounds have attracted much attention in the field of optical recording. As discussed in Jun'Etsu Seto, Photochromic Dyes, the photochromic materials initially studied for such an application did not have significant sensitivity in the infrared region near 800 nm, the wavelength region of conventional laser diodes. Seto recognizes, however, that a specific class of photochromic compounds, known as spiropyrans, can be manipulated to exhibit improved sensitivity in the infrared region. Specifically, Seto discusses a class of photochromic spiropyrans with benzothiopyran units in the molecular framework and concludes that the synthesized spirobenzothiopyran is well suited to the requirements of erasable optical recording media for systems using conventional laser diodes.

Another dye of the spiropyran class, having the chemical composition 6-nitro-1'3'3'-trimethylspiro[2H-1-benzothiopyran-2,2'-indoline], or 6-nitro-1-SBIPS for short, is discussed in Tarkka, Richard U., Talbot, Marc E., et al. , "Holographic Storage in a near-ir sensitive photochromic dye", Optic Comm. 109, 54-58 (1994). This article discusses the use of 6-nitro-1-S-BIPS for use in the holography field wherein the dye becomes colored when exposed to light having a wavelength of 780 nm. The film returns to a quasiclear state upon exposure to an ultraviolet light source at 337 nm.

EP-A-0,660,313 describes an optical disk comprising a recording membrane incorporating photochromic material. UV exposure colours the membrane and enhances its sensitivity to laser light. Data can then be written on the membrane using a laser beam to form pits. Re-exposure returns the membrane to a colourless state with low sensitivity, so that data can no longer be written. The photochromic material is thus used to allow or prevent data writing as required. Data on the disk can be read at all times.

An alternative recording medium utilising photochromic material is described in JP-A-04,128834. A layer of reverse photochromic dye is arranged over a recording layer, and acts as a "light shutter". When exposed to suitable wavelengths, the dye can be changed back and forth between absorbant and transparent states. The absorbant state absorbs a laser beam used to access the recording layer, thus disabling the medium. A user can therefore permit or deny access to data by irradiating the light shutter.

JP-A-04,318342 describes an alternative data protection arrangement. A recording medium includes a layer of material which discolours to prevent access to recorded data in the event of a user peeling layers of the medium to attempt to alter recorded data. Thus, the data is protected from alteration since any attempt at alteration will effectively destroy the data.

It is anticipated, based on these recent developments, that the conventional magnetic disk will eventually become obsolete due to the recent developments in optical storage technology. Concurrent with this anticipated phaseout of magnetic disks will be a need to adequately address the piracy issues which have for so long plagued the software industry so that the illegal misappropriation of proprietary rights can be thwarted. Accordingly, while past research has concentrated on utilizing photochromic materials for the recording of information on compact disks, the present inventors have realized that similar photochromic materials may also be used to protect the compact disk against illegal copying and distribution. In addition, the present inventors have also recognized that certain other photoreactive materials, as well as oxygen reactive materials, may be employed for this purpose. That is, compounds such as these may be used to deny access to a specially coated compact disk beyond one or more authorized uses. That is, such compounds, when applied as a coating on a disk, operate to effectively change its light transmissive properties upon exposure to a low power reading laser, thereby darkening the coating on the disk and rendering data undetectable by an optical readout system. Moreover, the inventors have also recognized other optical media data protection techniques
that also address the unrestricted duplication of information as discussed hereinabove.

### SUMMARY OF INVENTION

It is an object of the present invention to provide a new and useful optical medium, such as an optical disk, and system therefor which is adapted for use with an optical readout system of, for example, a computer, wherein the readout system includes a light source operative to produce an interrogating beam of light for reading data structures on the optical medium.

Another object of the present invention is to provide such an optical medium which is particularly adapted to prevent unrestricted access to encoded information thereon by an optical readout system, wherein the information may be, for example, graphical data, video data, audio data, text data, and/or a software program.

A further object of the present invention is to provide a new and useful optical disk which is relatively easy to manufacture without substantial increases in costs.

Yet another object of the present invention is to provide a methodology of limiting access to information stored on an optical medium for use in a computer's optical readout system.

Still a further object of at least some embodiments of the present invention is to provide an optical disk which is particularly constructed so that an end user is unaware of the disk copy protection features until after they have been performed.

Accordingly, a first aspect of the present invention is directed to a limited access optical disk adapted for use in an optical readout system that includes a light source operative to produce an interrogating beam of light for reading data structures, comprising:
(a) a reflective layer encoded with information stored thereon as a plurality of data structures that are readable by an interrogating beam of light;
(b) a substrate disposed in a confronting relationship with said reflective layer, and
(c) a reactive material superimposed over at least some of said data structures, said reactive material selected to be of a type that is operative to change, automaticall and after an accumulated duration of time, at least one optical property or physical property in response to a stimulus, wherein said change in at least one optical property or physical property in response to said stimulus interferes with said optical readout system reading at least some of said data structures, and said change in at least one optical property or physical property is not reversible.

A second aspect of the present invention is directed to a method of limiting access to data stored on an optical disk having:(a) a substrate, (b) a reflective layer encoded with information stored thereon as a plurality of data structures that are capable of being read by detecting optical reflections from said reflective layer, and (c) a reactive material through which radiation passes prior to being reflected for reading at least some of said data structures, said method comprising:
activating said reactive material, wherein said reactive material changes, automatically and after an accumulated duration of time, at least one optical property or physical property in response to a stimulus, wherein said change in at least one optical property or physical property in response to said stimulus interferes with reading at least some of said data structures and said change in at least one optical property or physical property is not reversible;
providing an optical disk reader for reading said optical disk, wherein said information stored on said optical disk is read by detecting reflections of radiation directed at said reflective layer;
allowing said information to be read when said reactive material does not interfere with an interrogating beam of radiation of the optical disk reader; and
prohibiting access to said information stored thereon when said reactive material interferes with the interrogating beam of the optical disk reader.

A collection of embodiments of the present invention accomplishes the above objectives by providing an article of manufacture (e.g., an optical disk) that is adapted to be encoded with data and further adapted so that duplication of the data by an optical scanning machine (i.e., an optical readout system) may be restricted. The article of manufacture comprises a substrate fabricated from a selected material, with a surface thereof provided with the data. A reactive compound is formed as a coating on at least a portion of the substrate surface and the reactive compound operates to change from an optically transparent state to an optically opaque state in response to irradiation for an accumulated duration of time by infrared light having desired characteristics, thereby to prevent light from the optical scanning machine from penetrating the reactive compound and to render the data undetectable by the optical scanning machine.

More particularly, an optical disk is provided which is adapted for use in an optical readout system of a computer wherein the optical readout system includes a light source operative to produce an interrogating beam of light for reading data structures. Broadly, the optical disk according to the first collection of embodiments of the present invention includes an inner layer having an upper surface and a lower surface, with the lower surface thereof encoded with information stored as a plurality of data structures that are readable by the interrogating beam of light. The outer layer is disposed in a confronting relationship with the lower surface, and a film of a reactive compound is superimposed over at least some of these data structures. The reactive compound is selected to be of a type which is operative to change physical characteristics in response to a selected stimulus, thereby to affect readability of the data by the interrogating beam.

Preferably, the optical disk includes a layer of reflective material interposed between the lower surface and the reactive compound. This reactive compound may be supported on a lower surface of the disk's second layer and have a thickness of approximately 2-5 microns or, alternatively, it may be interposed between the lower surface and the disks outer layer. The lower surface is preferably contoured to include a sequence of pits and lands which define the plurality of data structures, with the reactive compound superimposed over at least some of these pits and lands.

The selected stimulus to which the reactive compound responds may be an ambient environment selected to be either visible light, infrared light, light and oxygen, or simply air. Where the stimulus is light alone, the reactive compound may be a photoreactive material and preferably one selected from a spiropyran class of photochromic compounds.

Where the stimulus is a combination of light and oxygen, the reactive compound would therefore be photoreactive with oxygen and preferably operate to change its physical characteristics in response to an interrogating beam of light having a wavelength of approximately 650 nanometers (nm), which is encountered with digital versatile disk (DVD) readers.

Where the environmental stimulus is simply air (more precisely, oxygen), the reactive compound may be one which is operative after an accumulated duration of time to oxidize and alter an optical characteristic thereof. For example, such a reactive compound would change from an optically transparent condition to an optically opaque condition wherein it absorbs light having a wavelength within a desired range. This wavelength could be either 650 nanometers (nm), as discussed above, but may also be in the range of 780 to 820 nanometers (nm). The oxidizing reactive compound may be selected from a group of dyes consisting of methylene blue, brilliant cresyl blue, basic blue 3 and toluidine blue 0.

A methodology of limiting access to data stored on an optical medium such as an optical disk is provided by the first collection of embodiments. Broadly, this methodology comprises the steps of rotating an optical disk in a disk drive at a selected rotational speed, with the optical disk including a substrate layer encoded with information stored thereon as a plurality of readable data structures. A reactive compound is preferably superimposed over at least some of these data structures and this reactive compound operates in an ambient environment containing oxygen to change optical transmission in response to irradiation for an accumulated duration of time by light having a beam wavelength that is within a selected range. An interrogating beam of light having a beam wavelength that is within the selected range is directed toward the substrate layer and through the reactive compound for the accumulated duration of time.

The step of directing the interrogating beam may be accomplished by directing the beam at the substrate layer for a continuous interval of time that is sufficient to cause the change in optical transmission through the optical medium. Alteratively, the interrogating beam may be directed at the substrate layer for a plurality of discrete intervals of time sufficient to cause such change. Where this is the case, it is contemplated that the interrogating beam may be selectively advanced radially across an outermost surface of the optical disk until the beam interacts with the reactive compound for the plurality of discrete intervals of time. The interrogating beam's wavelength may be approximately 780 nanometers (nm) where a CD-Rom optical disk is utilized, or have a wavelength of approximately 650 nanometers (nm) which is the wavelength employed for digital versatile disks (DVD). Preferably, the interrogating beam also has an intensity of approximately 1 milliwatt (mW) of power, which is typically encountered in conventional optical readers.

These and other objects of the present invention will become more readily appreciated and understood from a consideration of the following detailed description of the exemplary embodiments of the present invention when taken together with the accompanying drawings, in which:

### BRIEF DESCRIPTION OF DRAWINGS

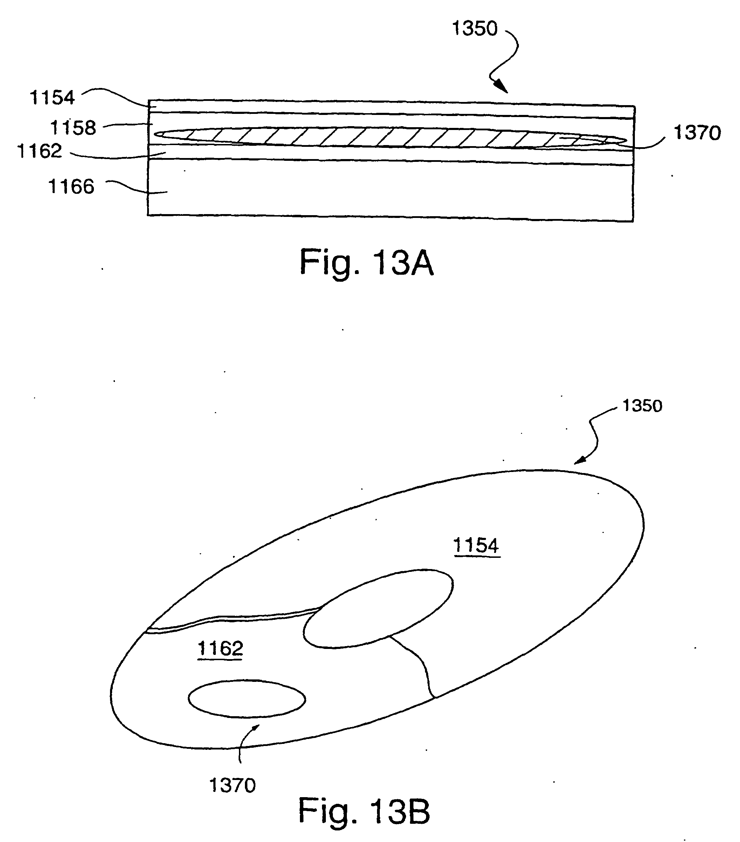

Fig. 1 is a perspective view of an optical readout system utilizing an optical disk (shown in partial phantom) according to the present invention;
Fig. 2 is a side view in elevation, and in partial cross-section, showing the optical readout system's interrogating beam positioned beneath a first type of data structure stored on an optical disk according to a first exemplary embodiment of the present invention;
Fig. 3A is an enlarged cross-sectional view of area "A" in Fig. 2;
Fig. 3B is an enlarged cross-sectional view of area "A" in Fig. 2 after an accumulated duration of time so that the reactive compound associated with the optical disk of the first exemplary embodiment of the present invention has undergone a change in its physical characteristics;
Fig. 4 is a side view in elevation, and in partial cross-section, showing the optical readout system's interrogating beam positioned beneath a second type of data structure stored on the optical disk according to the first exemplary embodiment of the present invention;
Fig. 5A is an enlarged cross-sectional view of area "A'" in Fig. 4;
Fig. 5B is an enlarged cross-sectional view of area "A'" in Fig. 4 after an accumulated duration of time so that the reactive compound associated with the optical disk of the first exemplary embodiment of the present invention has undergone a change in its physical characteristics;
Fig. 6A is an enlarged cross-sectional view of an area "B1" of an optical disk according to a second exemplary embodiment of the present invention, with the optical readout system's interrogating beam positioned beneath a first type of data structure stored thereon;
Fig. 6B is an enlarged cross-sectional view of the same area "B" after an accumulated duration of time so that the reactive compound associated with the optical disk according to the second exemplary embodiment of the present invention has undergone a change in its physical characteristics;
Figure 7A is an enlarged cross-sectional view of an area "B'" of an optical disk according to a second exemplary embodiment of the present invention, with the optical readout system's interrogating beam positioned beneath a second type of data structure stored thereon;
Fig. 7B is an enlarged cross-sectional view of the same area "B'" after an accumulated duration of time so that the reactive compound associated with the optical disk according to the second exemplary embodiment of the present invention has undergone a change in its physical characteristics;
Fig. 8 is a perspective view, partially pealed away, of a package for containing an optical disk utilizing any one of a variety of reactive compounds according to the present invention; Figure 9 is a bottom plan view showing a variety of applications for the reactive compound associated with an optical disk according to the present invention;
Figs. 10A, 10B and 10C present a flowchart of steps performed to install computer software residing on an alternative optical disk,
   wherein the user is required to make a manual change to the optical disk during the first installation using the optical disk;
Figs. 11A and 11B illustrate a manual approach to irreversibly changing the physical characteristics of an alternative optical disk.
   That is, the optical disk here includes an additional layer bonded to the optical disk wherein upon removal by the user, the information encoded on the optical adjacent to the additional layer is damaged;
Fig. 12 illustrates the removal of the additional layer (denoted a "ripcord") that is also shown in Figs. 11A and 11B;
Figs. 13A and 13B illustrate an alternative to the optical disk of Figs. 11A - 12B for purposefully damaging an optical disk.
   In particular, in Figs. 13A and 13B, a chemical container or sack is bonded to an optical disk so that upon rupturing of the container (during, e.g., an initial optical disk use), the information on the optical disk is purposefully damaged, thereby allowing a subsequent installation process to detect the previous access to the information on the optical disk;

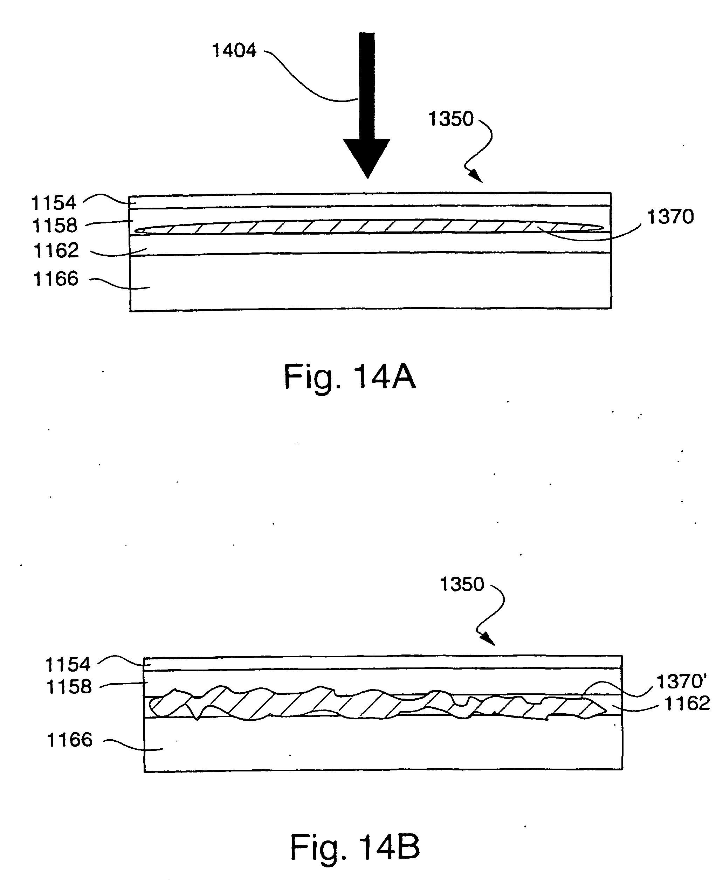

Figs. 14A and 14B illustrates cross-sections of the optical disk of Figs. 13A and 13B, wherein Fig. 14A shows the chemical container prior to rupturing and Fig. 14B shows the chemical container after rupturing;

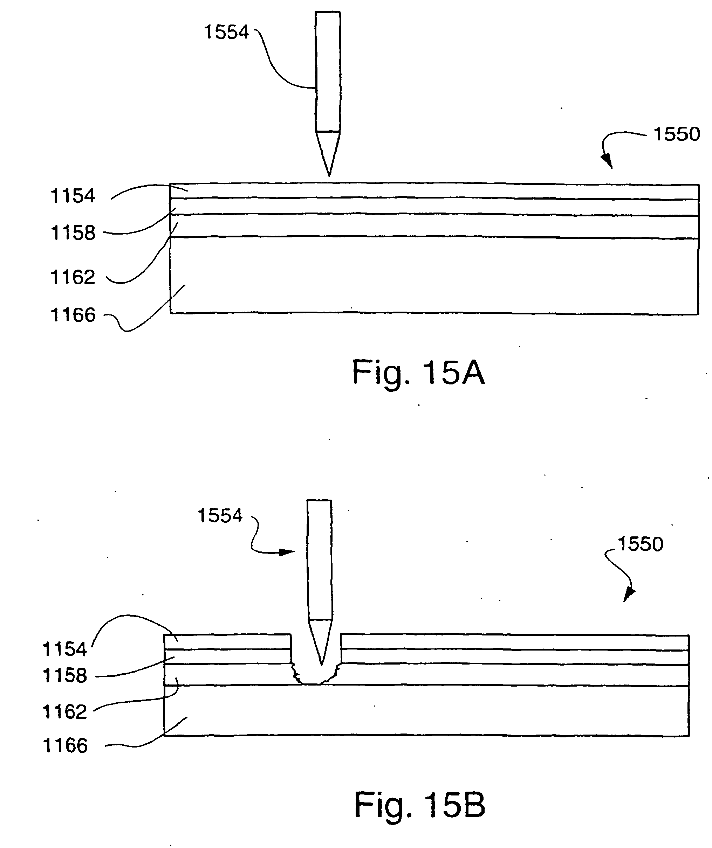

Figs. 15A and 15B illustrate another alternative for purposefully damaging an optical disk wherein an external device is used that can etch or scar the optical disk and thereby reduce the readability of disk information in a particular area of the disk;

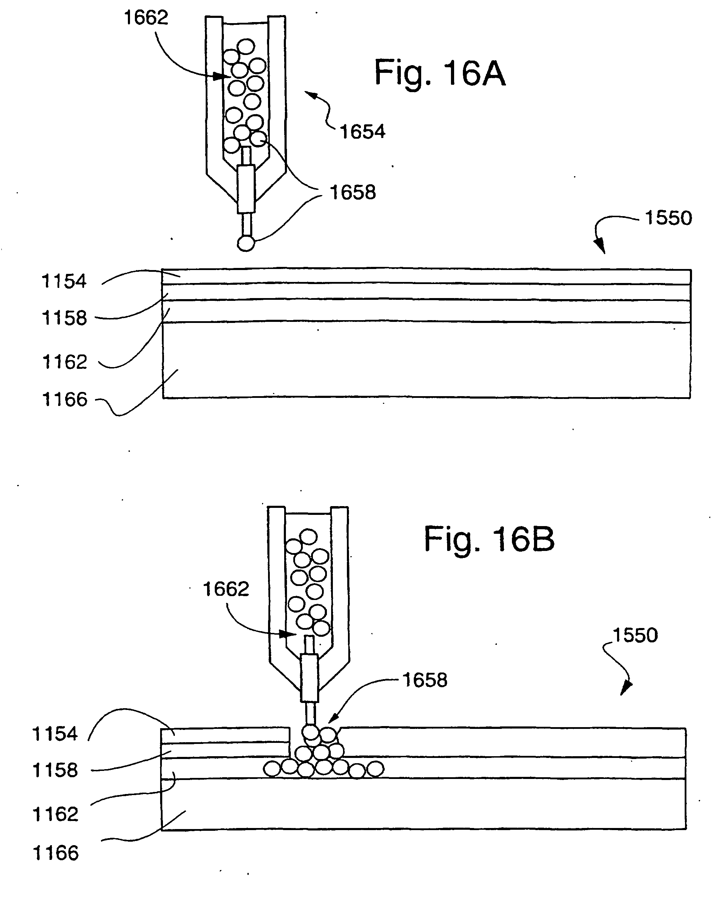

Figs. 16A and 16B illustrate yet another alternative for purposefully damaging an optical disk manufactured according to the present invention. An external device is used for applying one or more chemicals to a particular or predetermined portion of the optical disk and thereby inducing additional read errors from an optical disk reader;

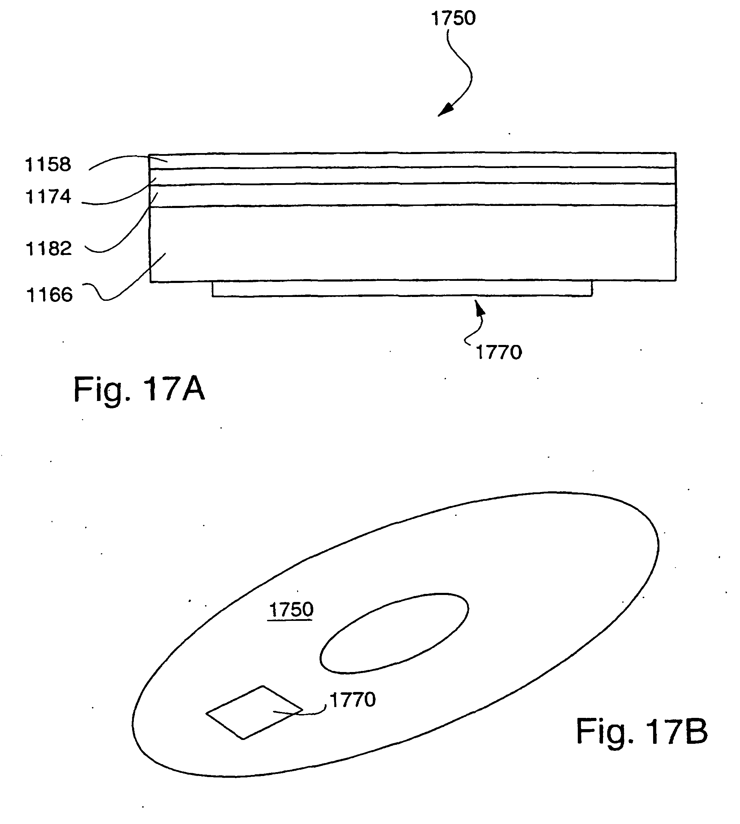

Figs. 17A and 17B illustrate an alternative optical disk,
   wherein an additional layer is provided on the optical disk during manufacture for hiding or masking a particular portion of the information on the optical disk;

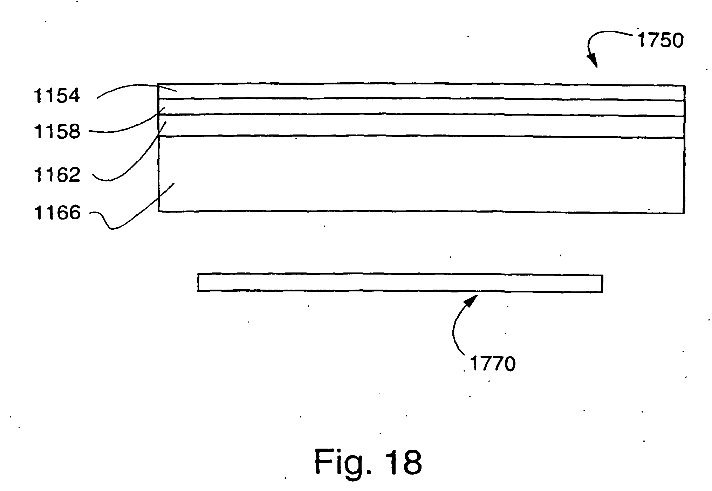

Fig. 18 illustrates the removal of the additional layer (also denoted a "ripcord") from the optical disk of Figs. 17, wherein the optical disk information masked by the ripcord is now capable of being read by an optical reader;

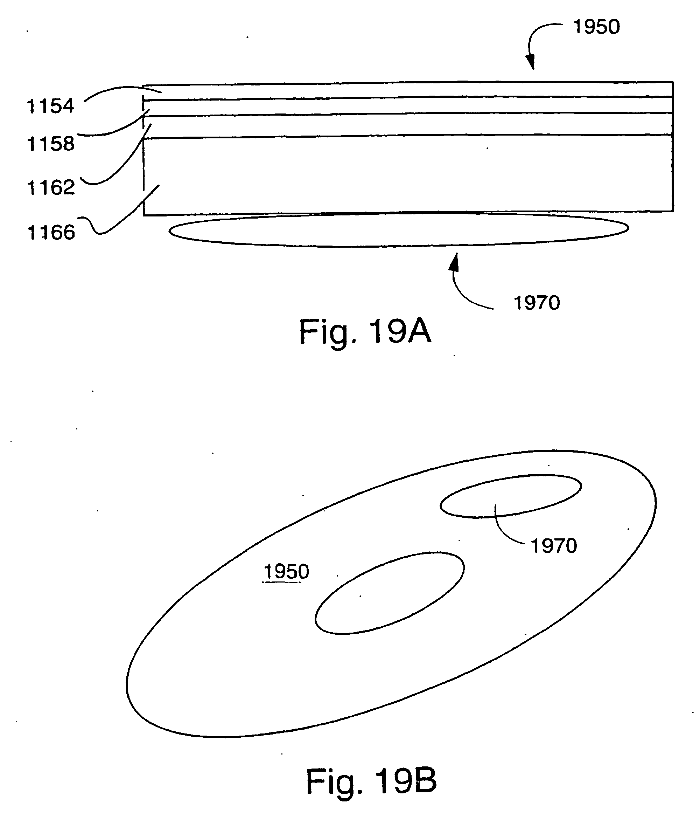

Figs. 19A and 19B illustrate another alternative,
   wherein a container or sack having one or more chemicals is attached to an optical disk during manufacture so that this container initially masks or distorts information encoded into the optical disk; however, upon rupturing of the container, the masked information on the optical disk is now capable of being read by an optical reader;

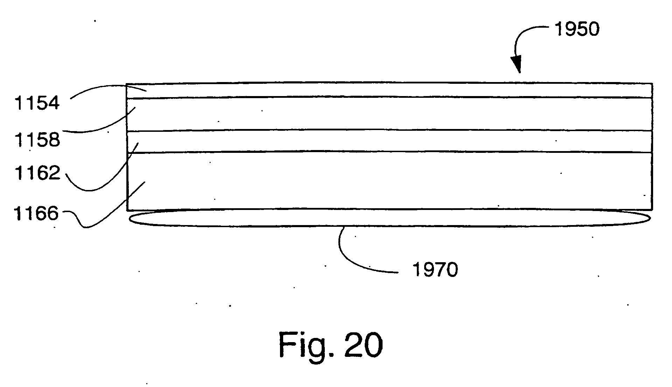

Fig. 20 illustrates the optical disk shown in Figs. 19A and 19B, wherein Fig. 20 shows the cross-section of the optical disk after the chemical container is ruptured; and

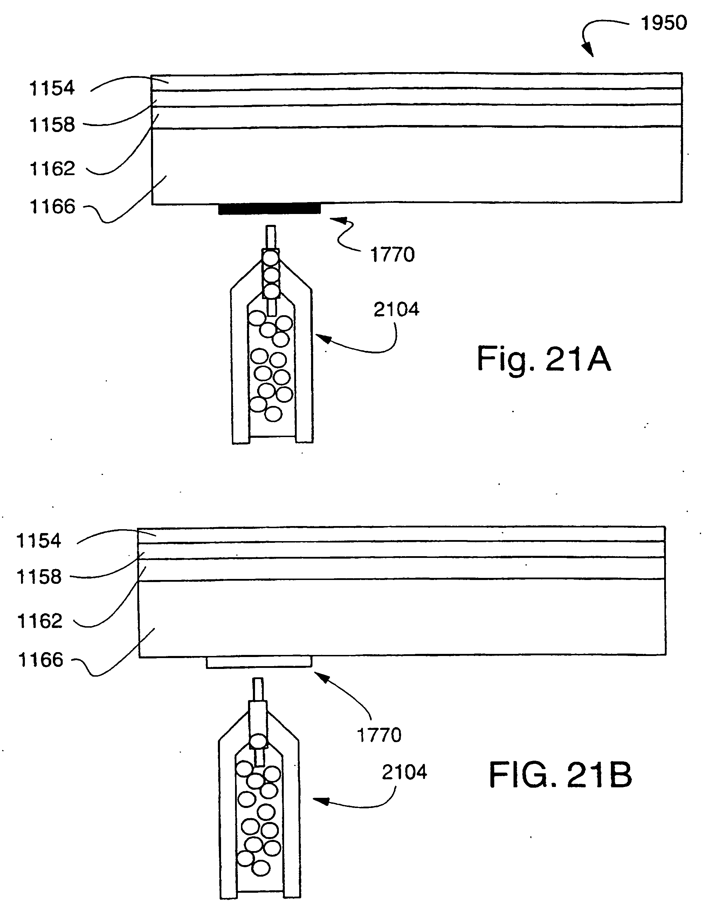

Figs. 21A and 21B illustrate the use of an external device having an enclosed chemical that can be used for removing or changing the optical characteristics of a patch or additional layer that masks information on the optical disk;

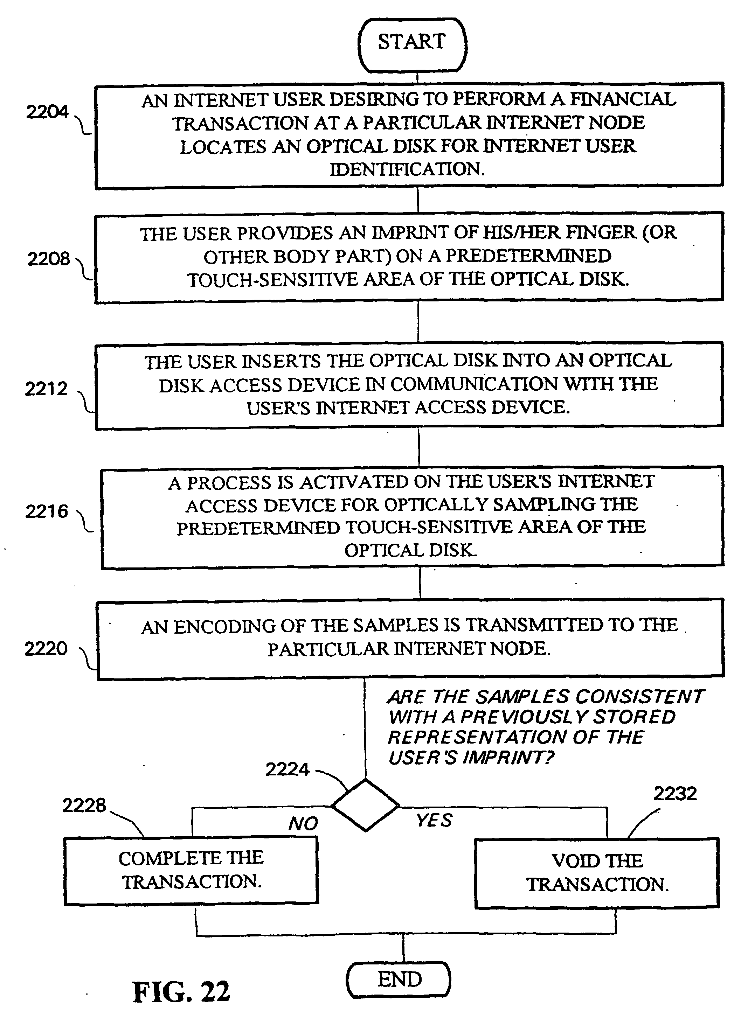

Fig. 22 is a flowchart of steps performed in verifying the identity of user requesting to perform an electronic financial transaction via, for example, the Internet.

### DETAILED DESCRIPTION

The present invention is, in one sense directed to an optical disk for use in a computer's optical readout system, which optical disk is constructed to prohibit unrestricted access, by the readout system, to information stored on the disk. As such, the optical disk of the present invention is particularly adapted as an alternative approach for combating the growing piracy problems resulting from the illegal misappropriation of software products. As will be appreciated, the present invention is also directed to a methodology for limiting access to data stored on an optical medium. While both the optical disk of the present invention and the methodology for utilizing the same in a computer's optical readout system is described herein with reference to a conventional CD ROM disk, the ordinarily skilled artisan would readily appreciate that the teachings of the present invention may also be applied to other types of optical disks, such as audio CD's, WORM (Write Once Read Many) optical disks, and DVD (Digital Versatile Disks), to name only a few.

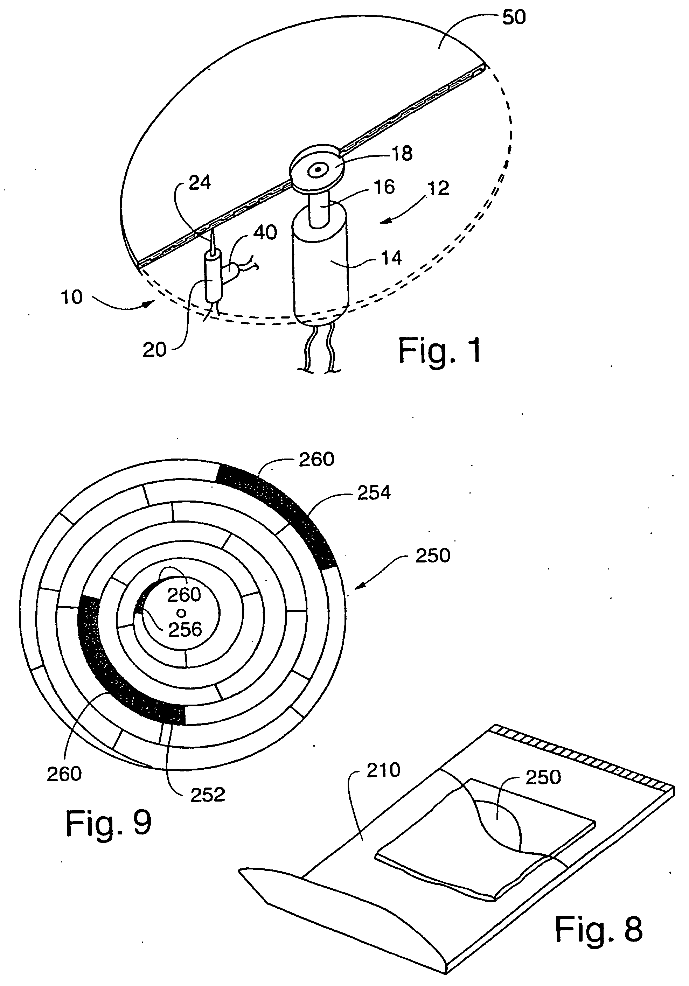

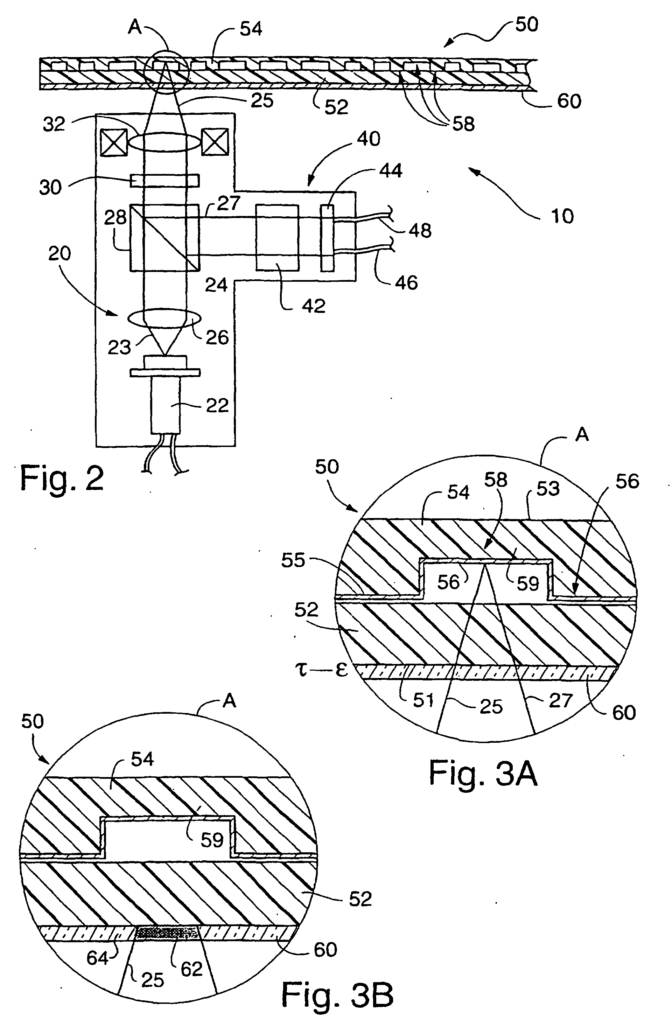

With this in mind, then, a typical optical readout system 10 of a computer incorporating an optical disk according to the first exemplary embodiment of the present invention is introduced in Figs.1 and 2. Optical readout system 10 broadly includes a disk drive 12 which is operative to rotate an optical disk 50 at a selected rotational speed, a light source 20 for producing an interrogating beam of light and a detector 40 which is operative to collect a returned component of the interrogating beam and to produce an output signal correlated to this returned component.

More specifically, and as is known in the art, disk drive 12 includes a motor 14 comprising a drive shaft 16 and a spindle 18 to which the CD-Rom optical disk 50 is mounted, and this motor 14 operates to constantly vary the rate at which the optical disk 50 is spun so that, regardless of where detector 40 is located in relation to the radius of optical disk 50, the portion of disk 50 located immediately above detector 40 is always moving at the same rate. Unlike conventional magnetic disks, which are divided radially into sectors and spin at a constant angular velocity, data on a CD-Rom disk is contained in a single track that spirals from the center of the disk to its circumference. This track is still divided into sectors, but each sector is the same physical size. Using a method known as constant linear velocity, the disk drive 12 constantly varies the rate at which (optical disk) 50 spins so that as detector 40 moves toward the center of the optical disk 50 the disk increases its rotational speed. The effect of this is that the optical disk 50 can contain more sectors than a conventional magnetic disk and, consequently, more data.

Light source 20 generates an incident or interrogating beam of light via laser diode 22 and this beam 23 is initially collimated by collimator 26. The collimated beam is then directed toward a polarized beam splitter, or prism 28, after which it is sent through a quarter wave plate 30. Alternatively, for optical readout systems wherein the laser diode 22 and collimator 26 are offset in position relative to beam splitter 28, a wedge mirror prism may be employed to direct the beam in an axial direction relative to optical disk 50. After collimated beam 24 encounters quarter wave plate 30 it is thereafter directed through an objective lens 32 and an appropriate focusing coil to produce a concentrated and focused interrogating beam 25.

Focused interrogating beam 25 penetrates substrate 52 of optical disk 50 and typcially strikes a metallic reflective layer 56 that is coated on the substrate 52. Metallic layer 56, itself, is encoded with information stored as a plurality of data structures 58 and is specifically contoured to include a sequence of lands 57 and pits 59 which define these data structures 58. This may be accomplished with a conventional stamping process wherein metallic layer 56 is pressed into substrate 52 to create pits 59. Lands 57 are those areas which are not pressed and remain in their original position. Metallic layer 56 is approximately 1 micron thick and pits 59 are, by design, only one quarter wavelength of the wavelength of interrogating beam 25. Lands 57 and pits 59 correspond to the 1's and 0's used to store data information. The interrogating beam 25 from laser diode 22 is focused at the surface level of lands 57, as shown. Whereas, light that strikes a pit 59 is scattered, light that strikes a land 57 is reflected as a returned beam 27 and directed back through polarized beam splitter 28. Beam splitter 28 deflects the returned beam 27 towards a tracking error detector 42, which controls tracking and focusing of the laser beam to sub-micron levels, and ultimately to light detecting photo diode 44. Light that strikes photo diode 44 generates a small electrical voltage at electrical leads 46, 48 and these voltages are matched against a timing circuit to generate the stream of 1's and 0's that the computer can understand. Accordingly, photo diode 44 converts the presence or absence of lands into an electrical signal.

The construction of a first exemplary embodiment of optical disk 50 may better be appreciated now with reference to Fig. 3(a) which is an exploded view of area "A" in Fig. 2. Optical disk 50 is constructed somewhat similarly to CD-Rom disks or audio compact disks now available. That is, as discussed above, optical disk 50 includes a substrate 52 and a metallic layer 56 upon which a protective coating 54 is placed. The metallic layer 56 is formed so that it is encoded with the information stored thereon as the plurality of data structures 58 that are readable by interrogating beam 25. Substrate layer 52, which may be formed out of polycarbonate, is disposed in a confronting relationship with metallic layer 56. As shown, metallic layer 56 is interposed between a lower surface 55 of protective coating 54 and substrate 52.

Unique to the present embodiments of the invention, though, is the inclusion of a film of reactive compound 60 that is superimposed over at least some of data structures 58. This reactive compound 60 is selected to be of a type which is operative to change physical characteristics in response to a selected stimulus, and thereby to affect readability of the information by interrogating beam 25.

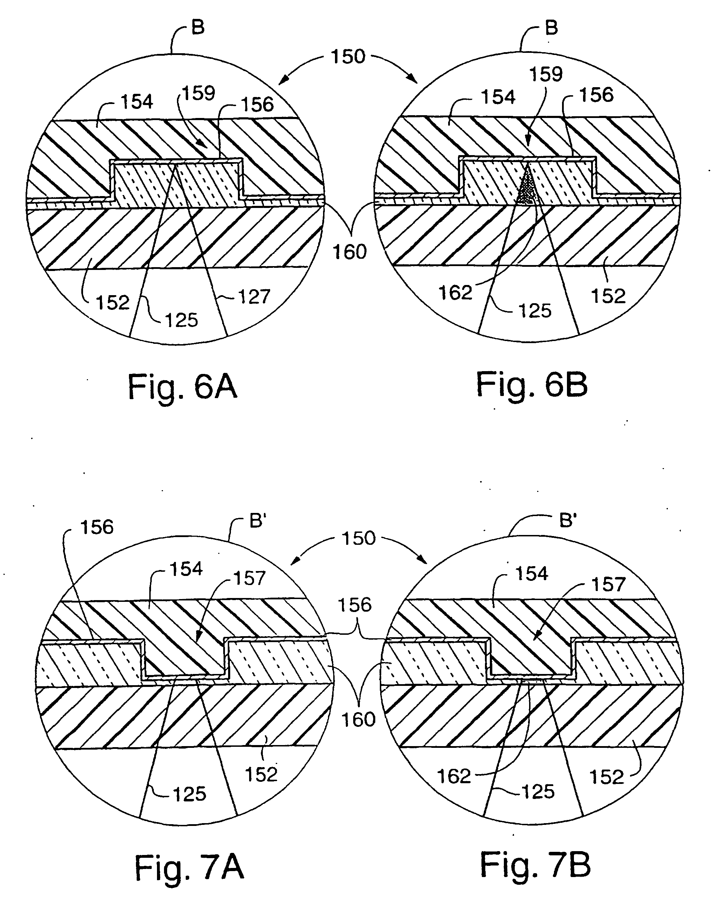

In this first exemplary embodiment of optical disk 50, reactive compound 60 is formed as a coating on a lower surface 51 of substrate 52. In alterative embodiments, the reactive compound may be:
(a) interposed between the metallic layer 56 and the inner surface of substrate 52 as discussed more thoroughly below with reference to Figs. 7A-7D, or
(b) embedded within the substrate 52. The selected environmental stimulus to which the reactive compound responds, regardless of its location in the optical disk, will also be discussed more thoroughly below with reference to certain classes of chemical materials from which the reactive compound may be chosen. Briefly, however, for each environmental stimulus to which the reactive compound responds, the reactive compound changes its optical transmission characteristics from an optically transparent condition to an optically opaque condition whereby it masks the data structures and affects the integrity of the electrical signal generated by the computer's optical readout system.

For example, Figs.3A and 3B illustrate how the integrity of the optical readout system's electrical signal is affected when the interrogating beam 25 encounters a land 57. As shown in Fig. 3A, interrogating beam 25 initially is able to penetrate both the reactive compound 60 and substrate 52 to detect the presence of land 57, which for purposes of discussion only, may correspond to data information in the form of the binary 1. Accordingly, interrogating beam 25 is reflected off of metallic (reflective) layer 56 as a returned beam 27 which is thereafter detected by light detecting photo diode 44, resulting in the generation an electrical signal correlated to land 57.

However, and as may now be seen with reference to Fig. 3B, after an accumulated duration of time, a region 62 of reactive compound 60 changes its physical characteristics to an optically opaque condition whereby interrogating beam 25 is absorbed by the reactive compound 60 and is no longer able to penetrate the substrate 52 to detect the presence of land 57. Therefore, light detecting photo diode 44 does not receive a returned beam, as expected, and generates an improper electrical signal to the computer. As far as the optical readout system 10 is concerned, the interrogating beam 25 is positioned directly beneath a pit as opposed to a land, resulting in an incorrect data transferred to the computer.

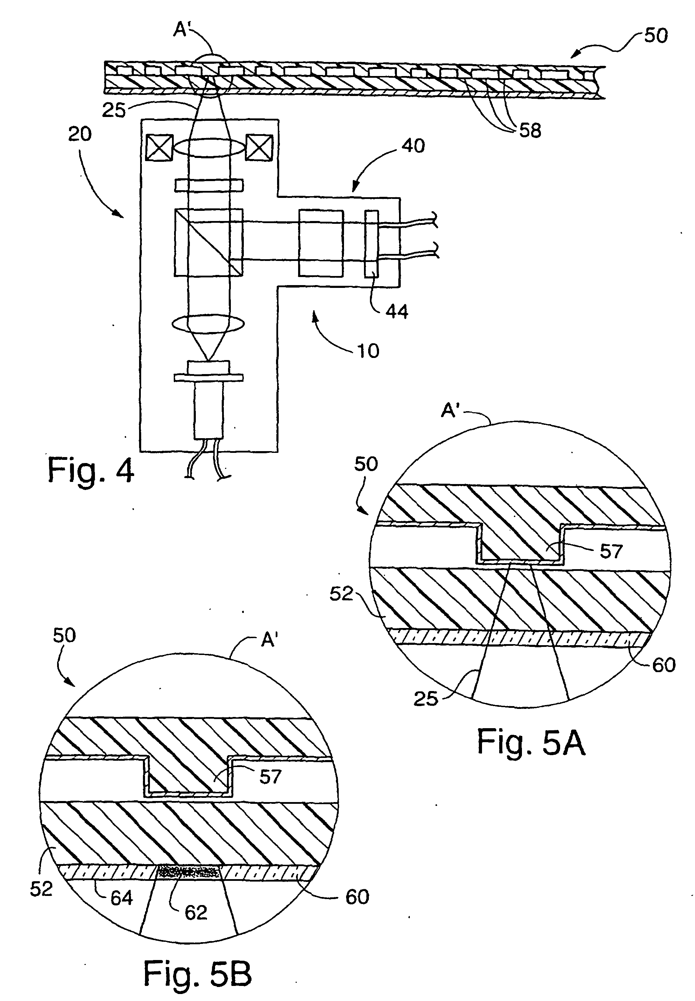

Figs. 4 and 5A-5B illustrate the situation where interrogating beam 25 is positioned directly beneath a data structure 58 in the form of a land 57. It may be appreciated that, here, light source 20 has been advanced either radially or circumferentially across the outer surface 51 of substrate 52 to a different location as dictated by the computer's program. Looking at the exploded area A' in Fig. 5A, it is seen that interrogating beam 25 is initially able to penetrate both reactive compound 60 and substrate 52 and impinge upon metallic layer 56 which coats land 57. Because reflective material 56 in this region is not positioned at the level of the interrogating beam's focal point, interrogating beam 25 is scattered. Thus, either no returned beam is reflected or an insufficient amount of light is reflected back to photo diode 44, thereby resulting in the generation of a binary electrical signal by detector 40 which corresponds to the presence of the encountered pit 59. This is the expected result.

After an accumulated duration of time, the region 62 of reactive compound 60 which is exposed to interrogating beam 25 becomes darkened or opaque. Light in this region 62 is absorbed and not allowed to penetrate substrate 52 to detect the presence or absence of pit 59. The result is, therefore, the same in that detector 40 generates a binary electrical signal, such as a zero, corresponding to the presence of a pit.

A second exemplary embodiment for the optical disk may now be appreciated with reference to Figs.6A - 6B and 7A - 7B. Here, the reactive compound 160 of optical disk 150 is shown to be interposed between the substrate 152 and metallic layer 156. While it is inherently more difficult to manufacture optical disk 150 than it would be to manufacture optical disk 50 which is referenced in the first exemplary embodiment of the present invention, the construction of optical disk 150 may be preferred from a performance standpoint because reactive compound 160 is located in a region where interrogating beam 125 would have a greater beam intensity than would beam 25 due to its relatively reduced focal width in this region. For all practical purposes, however, the results would nonetheless be the same.

For example, Fig. 6A again illustrates the situation where interrogating beam 125 is positioned beneath a land 157 such that the beam is reflected off of metallic layer 156 as a returned beam 127 which would be recognized by the detector and correctly converted into a corresponding binary electrical signal. In Fig. 6B, on the other hand, it is shown that after an accumulated duration of time, the region 162 of reactive compound 160 which has been exposed to a given environmental stimulus changes its physical characteristics from an optically transparent condition to an optically opaque or darkened condition. As such, interrogating beam 125 is absorbed in region 162 and no returned beam is detected, resulting in the generation of a binary electrical signal by the computer's optical readout system, despite the presence of pit 159. In Figs. 7A - 7B the situation is similar to that discussed above with reference to Figs.5A - 5B. Thus, when interrogating beam 125 is positioned directly beneath a pit 159, the computer's optical readout system would generate the proper binary electrical signal irrespective of the physical characteristic of reactive compound 160 in region 162.

### A. Classes of Materials For the Reactive Compound

Various classes of materials have been found which exhibit appropriate physical characteristics for utilization in the optical disk according to the exemplary embodiments of the present invention. Each of these materials responds to either a specific environmental condition, or a combination of environmental conditions, to mask the data structures on an optical disk, thereby affecting their readability by the computer's optical readout system.

### 1. Photo Reactive Compounds

It has been found that photoreactive materials exhibit desired light absorption characteristics and that these materials may be formed as a coating on an optical disk to mask at least some of the disk's data structures from detection by an optical readout system. Photochromes, and specifically the spiropyran class of photochromes, have particular utility. Photochromism is the phenomenon whereby the absorption spectrum of a molecule changes reversibly or irreversibly when the sample is irradiated by light having certain wavelengths. Molecules with reversible spectra are outside the scope of the appended claims. For example, a colourless compound can change to a quasi-stable colored structure when it is irradiated with infrared light. While a specific photochromic or photosensitive material of the spiropyran class is discussed herein, the ordinarily skilled artisan would appreciate that other photochromic materials such as aziridine derivatives, bipyradine derivatives, diohydropyrene derivatives, fulgide derivatives, thioindigo derivatives, azobenzene derivatives, salicylideneaniline derivatives, xanthane derivatives, oxazine derivatives may prove useful.

One spiropyran class dye, having the chemical composition 6-nitro-1'3'3'-trimethylspiro-[2H-1-benzothiopyran-2,2'-indoline], or 6-nitro-1-5-BIPS for short, is discussed in Tarkka, Richard U. Talbot, Marc E., et. al, "Holographic storage in a near-ir sensitive photochromic dye." Optic Comm. 109, 54-58 (1994), the teachings of which are incorporated herein by reference. When exposed to infrared light having a wavelength of approximately 780 nanometers (nm), a wavelength which is predominantly utilized in current optical readout systems, this dye becomes colored. The dye may thereafter be returned to its optically transparent state upon exposure to an ultraviolet source at approximately 337 nanometers (nm). This ability to erase the color from the dye is not fatal in that it requires a relatively expensive and difficult to find light source. 6-nitro-1-S-BIPS is preferably applied as a coating to the substrate of an optical disk as illustrated in Figs. 3 - 5 above. With this spiropyran derivative, or other appropriate chromophores, it is recognized that the environmental stimulus is simply exposure to the light sources interrogating beam.

### 2. Compounds Which are Photoreactive in the Presence of Oxygen

Two materials which may also be used in conjunction with the optical disk according to the present invention are photoreactive in the presence of an ambient environment containing oxygen.

### a. Compound I

One such material is denoted as compound I below: 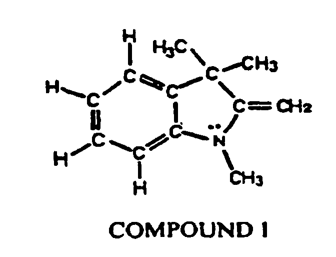 Compound 1 is made by treating tetramethylindolium iodide with 10 Molar equivalents of 1N sodium hydroxide in water with good mixing. As compound I is formed, it is extracted into the hexane co-solvent according to the following reaction: 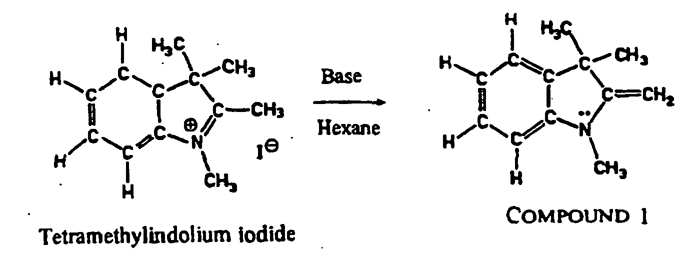 Alternatively, one molar equivalent of triethylamine in dichloromethane can be used and the product can be isolated by extraction with water, evaporation of a solvent and dissolution in hexane. The aqueous base method is preferred in that it yields in excess of 80% of the desired final product.

Compound I is photoreactive with oxygen and sensitive to ambient florescent light over several (> 18 hrs) exposure, is quickly (< -10 mins) photo oxidized upon exposure to an incandescent 150W lamp at a distance of 12 inches. Compound I also reacts upon exposure to light having a wavelength of approximately 650 nanometers (nm) and an intensity approximating that of a digital versatile disk (DVD) player light source. Accordingly, compound I is useful for application to an optical disk incorporated in developed DVD drives.

### b. Compound II

Another material which is photoreactive in the presence of oxygen can be made from quinoline salts and related enamine derivatives. This photoreactive material is denoted as compound II below and may be prepared, similarly to compound I, according to the following reaction:

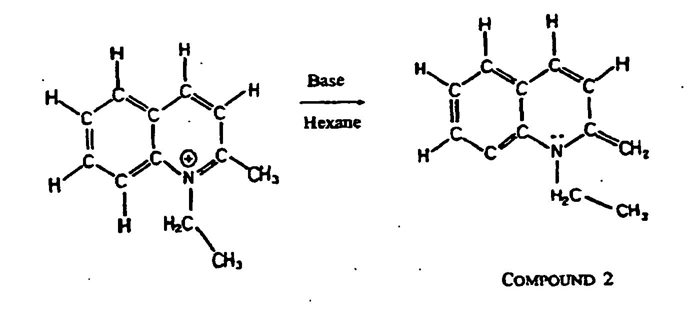

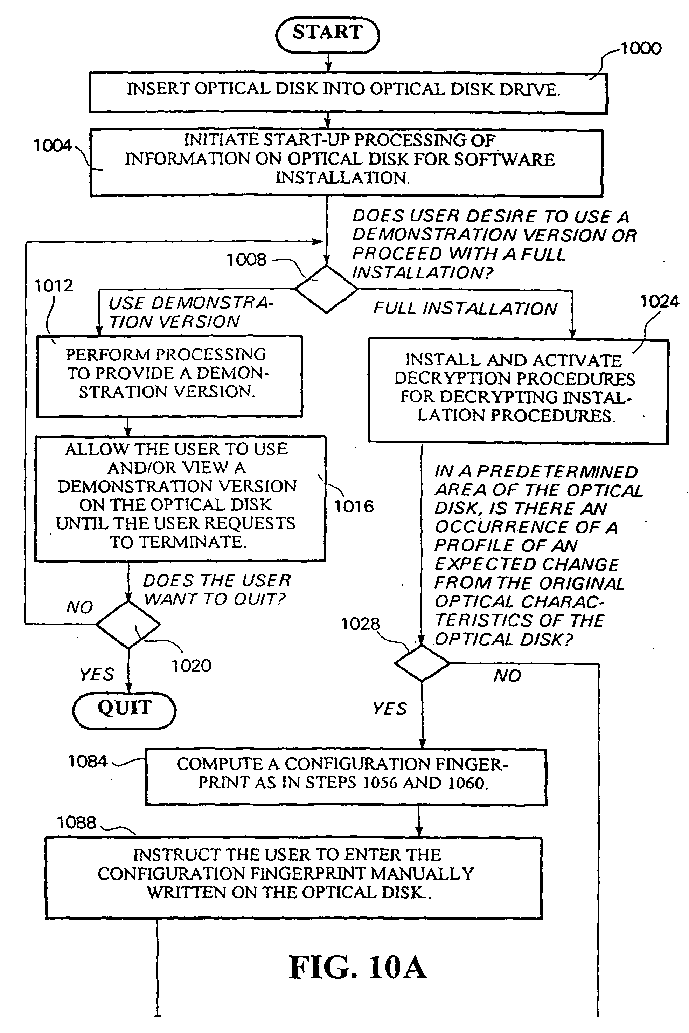

With both compounds I and II above, it should be appreciated that the environmental stimulus which causes them to change in optical transmission is a combination of both light and oxygen. Moreover, these compounds are specifically adapted for use in a computer's optical readout system which utilizes a light source having a wavelength of 650 nanometers (nm). Because these compounds react to change their light absorption characteristics in the presence of an ambient environment containing oxygen, the required amount of time for such change varies depending upon the wavelength of the ambient light. It is, therefore, desirable that the optical disks coated with either compounds I or II, be packaged in an inert environment and/or a standard hermetic packaging. To this end, Fig. 8 shows that such an optical disk 250 is preferably contained in a package 210 in the form of an aluminum bag coated with polyethylene. Contained within package 210 is an inert gaseous environment, such as argon, nitrogen, neon, helium, or other ambient gas.

### c. Materials Which Are Oxygen Reactive

It has also been found that certain oxygen reactive materials may be used in an optical readout system having a light source at a selected wavelength. One class of such materials is based upon the reduced forms of the well known dye, methylene blue. The method of synthesis and the oxygen dependent reoxidation to form the colored form of the methylene blue dye is shown below: 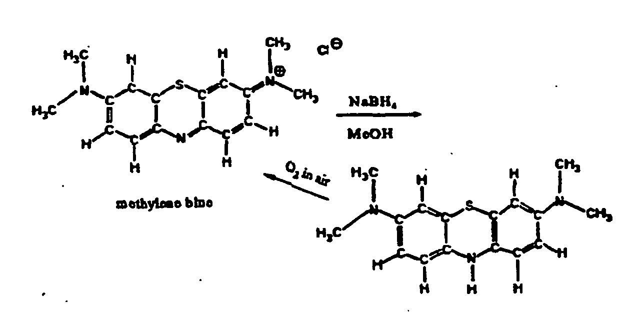 Various reducing agents can be used to reduce methylene blue and its many derivatives, with zinc and acetic acid being one possibility. The color of methylene blue when reduced is pale yellow and it quickly is re-oxidized to be dark blue by oxygen in air. The rate of this reaction is somewhat dependent on the medium, however. In polyurethane films, this rate has varied from about 10 minutes to 30 minutes depending on the concentration. When sodium borohydride residue is not quenched in these films, they gradually turn from clear to blue over several hours. The blue form of the methylene blue dye absorbs strongly at 650 nanometers (nm), the centered wavelength for DVD laser light readers.

Other dyes which are reactive in the air (e.g., to oxygen) perform similarly to the methylene blue and have maximum absorbencies that can vary by several tens of nanometers. The structures of some of these dyes known to perform like methylene blue and their commercial names are shown below: 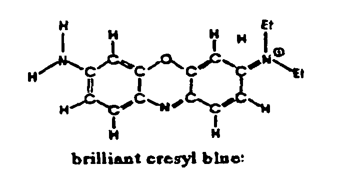 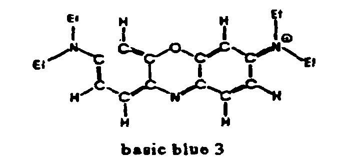 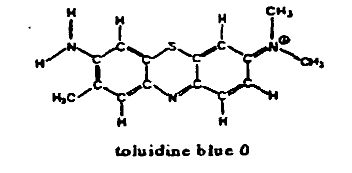 Finally, for optical readouts systems employing an interrogating beam having a wavelength of 780 nanometers (nm), a wavelength which is predominantly used in CD-Rom readers, one dye has been shown to reoxidize over approximately 48 hours and thereafter absorb light at this wavelength. The synthesis and oxidation of this dye, denoted as compound III, is shown below: 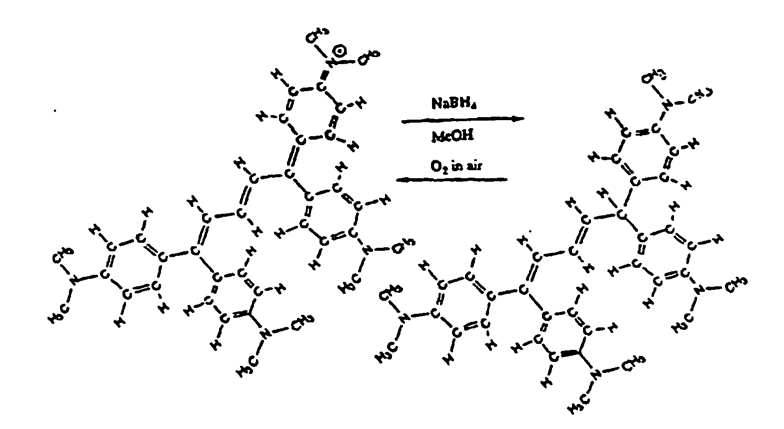 It is certainly contemplated that numerous other similar dyes can be synthesized to operate effectively in a given optical readout system. With each of the air reactive materials discussed herein, as with those materials discussed above which are photoreactive in an ambient environment containing oxygen, it is desirable to package the optical disk containing the dye in an inert environment as shown in Fig. 8.

With an understanding of the various compounds which the reactive compound of the present invention may assume, the ordinarily skilled artisan in this field would readily appreciate that the particular compound selected would depend on a variety of parameters of the operating environment. Where a CD ROM application is preferred, the reactive compound would necessarily be one that is compatible with this environment, sensitive to the infrared lasers used in the CD-Rom's optical readout system (i.e. 650 nm or 780 - 830 nm) and will react to the lower powered intensity of the interrogating beam (approximately .15 to .6 mW of power. For those reactive compounds which are reactive in the presence of oxygen, a user would of course be careful to avoid exposure of the optical disk to an ambient environment containing either oxygen, or light and oxygen, in order to prolong the useful life of the optical disk.

A primary thrust of the present invention is, of course, to deny access to a specially coated optical disk, and preferably a CD-Rom disk, beyond one or more authorized uses. To this end, one potential use for coating an optical disk with a reactive compound would be to allow for sample disks to be given away to customers in order for them to determine whether or not the product is worth purchasing. Once the product has been evaluated, the customer then might be required to return the product to the vendor and buy a commercial version of the sample optical disk. In one novel application of the present invention, such specially coated optical disks may have music encoded on them so that such disks are only playable for a particular period of time and/or for a particular number of times. Thus, optical disks that automatically expire are provided by the present invention. Moreover, note that movies and other multimedia presentations can be commercially provided in a similar fashion. Alternatively, a customer could purchase a coated optical disk and load it onto a computer's hard drive prior to the reactive compound changing its physical characteristics and rendering the optical disk unreadable.

Another potential application is the rental of optical disks which contain the reactive compound. Such an optical disk may be rented, much like videos cassette at a low cost and played until such time as the optical readout system of the disk player is no longer able to detect the presence or absence of the encoded information.

As shown in Fig. 9, the reactive compound may be applied to the optical disk in a variety of patterns. Fig. 9, of course, only illustrates a few such applications and others are certainly contemplated without departing from the concepts of the present invention. To illustrate, reactive compound 260 may be embossed as a film over an entire sector of optical disk 250, such as representative sectors 252 and 254. Alteratively, the reactive compound 260 may be applied to only a portion of a sector, such as region 256 in Fig. 9. Although, the entire surface of optical disk 250 could be coated with reactive compound 260, this is not a necessity, because the compound could merely be applied to that portion of the disk which contains critical information for the optical readout system to access in order for the software product to function properly. With specific reference to the spiropyran class of photochromes discussed above, it is also anticipated that a reactive compound of this type, which is adapted to reversibly change between a darkened colored state and a transparent state and is thus outside the scope of the appended claims, could be initially be applied in its darkened state to the surface of the optical disk. A software application residing on an optical disk for the present invention may execute properly only in the event that the optical readout system continues to process information as if no data were contained in this region. Once the photochrome changes to the transparent condition upon sufficient exposure to light, the optical readout system would be able to detect the plurality of data structures, and the software application then discontinues its proper function.

With the foregoing in mind, the embodiments of the present invention are directed to an article of manufacturer adapted to be encoded with data and further adapted so that duplication of the data by an optical scanning machine may be restricted. To this end, the article of manufacturer comprises a substrate fabrication from a selected material and having a substrate surface which contains the data. A reactive compound is formed as a coating on at least a portion of the substrate surface and this reactive compound is operative to change from an optically transparent state to an optically opaque state in response to a irradiation for an accumulated duration of time by light having selected characteristics, thereby to prevent the light from the optical scanning machine from penetrating the reactive compound and to render the data undetectable by the machine.

It should also be appreciated from the foregoing that another aspect of the present invention is a methodology of limiting access to data stored in an optical medium according to the first collection of embodiments. Broadly, this methodology comprises the steps of rotating an optical disk in a disk drive at a selected rotational speed, with the optical disk including a substrate and a metallic layer encoded with information stored thereon as a plurality of readable data structures and including a reactive compound superimposed over at least some of these data structures. The reactive compound is operative in an ambient environment containing oxygen to change optical transmission in response to irradiation for an accumulated duration of time by light having a beam wavelength that is within a selected range. The broad methodology would also include a step of directing an interrogating beam of light having a beam wavelength that is within the selected range toward the substrate and through the reactive compound for the accumulated duration of time.

The step of directing the interrogating beam of light could be accomplished by directing the beam toward the substrate for a continuous interval of time that is sufficient to cause the change in optical transmission. The methodology also contemplates that the interrogating beam can be directed at the substrate for a plurality of discrete intervals of time sufficient to cause the change in optical transmission. This might occur, for example, where the light source of the computer's optical readout system selectively advances the interrogating beam radially across an outermost surface of the optical disk until the beam interacts with the reactive compound for the plurality of discrete intervals of time. It is .preferred that the methodology be practiced with a beam wavelength approximately either 780 or 650 nanometers (nm) and a beam intensity of approximately 0.14 milliwatts (mW) 0.6 mW of power.

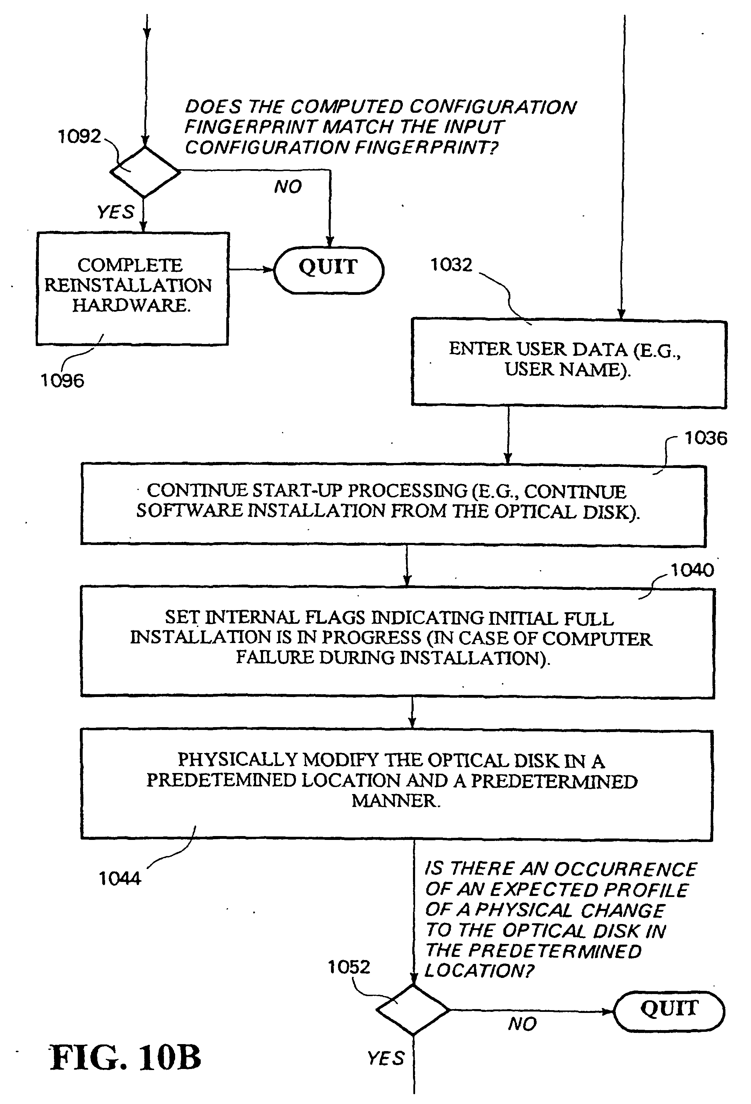

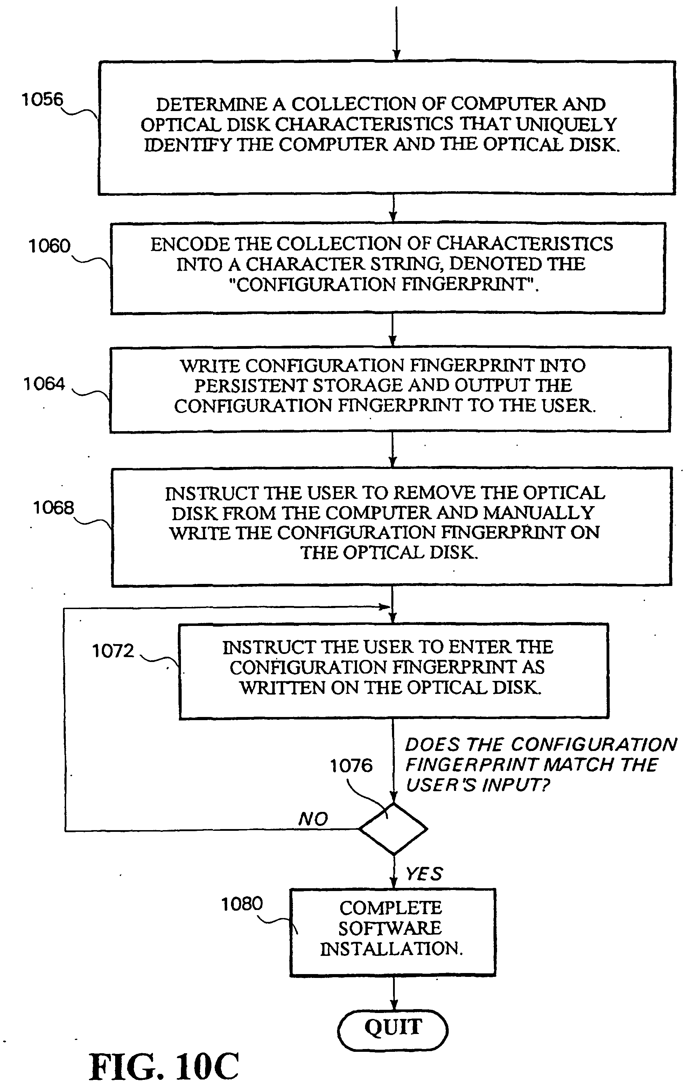

In Figs. 10A, 10B and 10C, a representative flowchart is provided of the steps performed in a method to prohibit unrestricted duplication and/or access of information on an alternative optical medium or disk. This method does not form part of the present invention. It is presented here for the purposes of comparison. In particular, the present method provides for purposefully inducing a physical change to the optical disk during its use; i.e., the physical change may be caused substantially automatically by, e.g., the activation of software on the optical disk, or alternatively may be caused as a purposeful effect of manual action by the user. More particularly, the flowchart of Figs. 10 illustrates the steps performed when installing software on a user's computer from the alternative optical disk. Thus, in step 1000, the user inserts the optical disk into the optical disk drive (also denoted optical readout system or optical reader hereinabove). Subsequently, in step 1004, the user initiates or activates a start-up or installation program for processing information on the optical disk during an installation of the software on the optical disk. Note that this installation program may be read from the optical disk as a first portion of the information read. Alternatively, this installation program may be downloaded from the Internet. Upon activating the installation program, the user may be allowed the option of either activating a demonstration version of the optical disk software wherein a manual change to the optical disk is not required. Assuming such an option is available, in step 1008, a response from the user is solicited as to whether the user desires to use a demonstration version of the software, for example, prior to performing a full installation on the user's computer. Accordingly, assuming the user requests to use a demonstration version, steps 1012 through 1020 are performed, wherein a demonstration version of the software may be loaded onto the user's computer thereby allowing the user to perform, for example, a restricted set of features of the optical disk software application.

Alternatively, if in step 1008, the user desires to fully install the software application from the optical disk, then step 1024 is performed, wherein one or more decryption procedures are installed into the user's computer from, e.g., the optical disk or the Internet. Note that at least some of the information residing on the optical disk is encrypted so that it is not easily duplicated as a non-executable sequence of bits or characters, and subsequently reverse engineered to obtain a fully functioning executable version of the software on the optical disk. Thus, it is to be understood that in the subsequent steps for installing the application software from the optical disk to the user's computer, that the encryption procedures installed in this step (1024) are activated one or more times for decrypting at least some crucial information transferred between the optical disk and the user's computer.

Subsequently, in step 1028, a determination is made as to whether a predetermined area of the optical disk has an occurrence of a profile of an expected physical change to the optical disk. That is, the start-up program assumes that the optical disk is in a particular predetermined physical configuration or state when obtained from the manufacturing process, and during this step, the start-up program determines if the physical characteristics of the optical disk conform to this assumed initial state or whether an occurrence of a particular profile of an expected physical change has occurred. In particular, note that the expected physical change, if detected, is assumed to be due to a previous installation of the software of the optical disk.

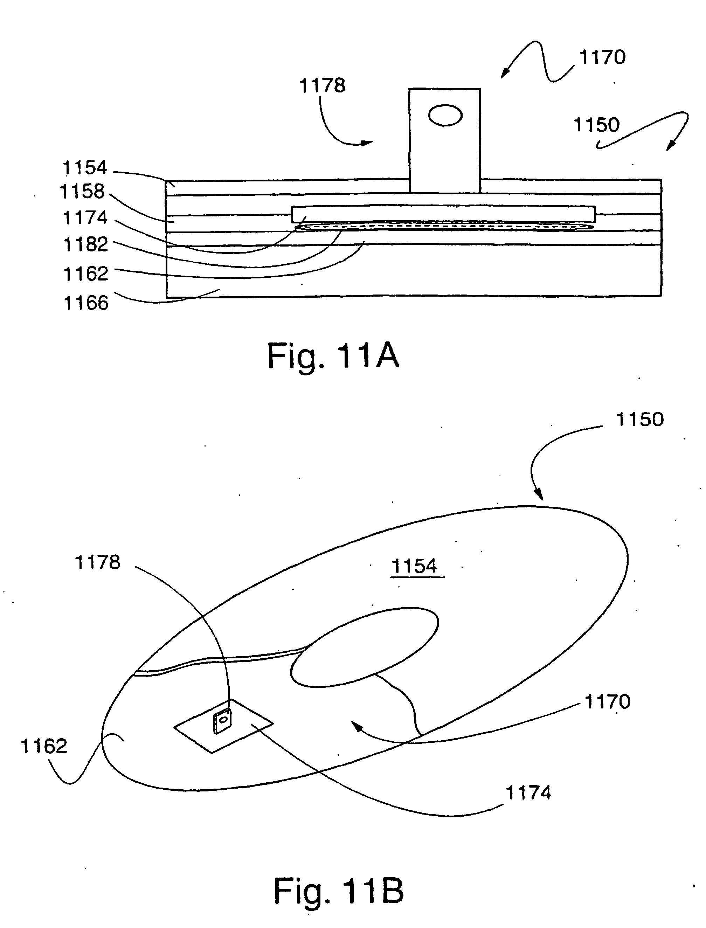

It is worth mentioning that such an expected physical change during such a software installation procedure may be due to any one of a number of user initiated techniques. For example, an additional layer or substance can be incorporated into the optical disk in a predetermined area so that upon purposeful removal by the user of the layer or substance (either mechanically or chemically), the optical information coinciding on the optical disk with this layer is changed in an expected arrangement so that in a subsequent installation attempt, this expected arrangement can be detected. In particular, examples of such techniques are discussed hereinbelow and illustrated in Figs. 11A through 14B. Alternatively, in another technique, an external device may be utilized by the user to intentionally change a predetermined portion of the optical disk as described hereinbelow with reference to Figs. 15A through 16B. In yet another technique, a predetermined portion of the optical disk can be initially provided with an additional coating or layer that distorts or hides a predetermined portion of the optical disk information so that upon first use of the optical disk for installing the software therein, this layer is either removed or changed in some fashion so that the information encoded underneath is capable of being read by the optical disk reader. In particular, this technique is described and illustrated hereinbelow with reference to Figs. 17A through 21B. However, for each such technique the predetermined portion of the optical disk having an intentional change may be limited to a minority of the storage capacity of the optical disk.

Moreover, if the expected physical change is due to a change in the errors detected (e.g. either an increase or a decrease in errors), additional steps may be performed by software implementing the flowchart of Figs. 10 wherein these additional steps activate and deactivate the optical disk error correction module(s) of the user's computer system. Note that this becomes an important time saving aspect in that considerable time can be consumed by the error correction module(s) in attempting to read purposefully induced unreadable errors. Thus, by deactivating the error correction module(s) just before a determination of whether an occurrence of an expected profile of errors is made (i.e., just before steps 1028 and 1052 of Figs. 10), and subsequently reactivating the error correction module(s) immediately thereafter, considerable time may be saved in, for example, (re)installing software from the optical disk, activating a presentation of a movie from the optical disk, etc.

Returning now to the steps of the flowchart of Figs. 10, assuming that in step 1028 the expected change from the original optical characteristics of the optical disk is not detected, then step 1032 is performed wherein the installation procedure may request user specific data such as the user's name and/or other user identifying information. Following this step, in step 1036, the installation procedure may install substantially all the software from the optical disk with the exception of one or more portions that are necessary for activating the software. Subsequently, in step 1040, the installation process sets internal flags indicating that an initial full installation of the software is in progress. This step provides a substantially failsafe feature of the present invention so that if there is a computer failure during installation, these internal flags can be subsequently detected in the persistent storage (e.g., the hard disk) of the user's computer, and subsequently used to reinitiate the installation procedure. Subsequently, in step 1044, the user is instructed to remove the optical disk from the computer and physically modify the optical disk in a predetermined manner and subsequently reinsert the optical disk into the computer.

Assuming that the optical disk has been reinserted, in step 1052 the installation procedure determines whether an expected profile of a physical change to the optical disk has occurred in a predetermined area of the disk. In particular, various embodiments of the present invention determine the physical change in the optical disk by analyzing a change, for example, in the errors generated when attempting to read certain predetermined locations on the optical disk. For instance, the change may be detected as: (a) a total number of errors generated in a sampling of locations in an area of the optical disk (e.g., a detected number of errors greater than a minimum threshold, or less than a maximum threshold), (b) a density of errors generated in a sampling of locations in an area of the optical disk (e.g., a detected density of errors greater than a minimum threshold or less than a maximum threshold), (c) a relative number of errors generated in a sampling of locations in an area of the optical disk, (d) a pattern of errors generated in a sampling of locations in an area of the optical disk, (e) a statistical analysis of the errors in a sampling of locations generated in an area of the optical disk, (e.g., a regression analysis). Moreover, instead of determining various measurements related to errors detected, the physical change in the optical disk may be detected by computing a measurement related to the non-error generating locations of an area of the optical disk. Thus, by replacing the word, "errors", with the word, "non-errors" in (a) through (e) above, additional examples for detecting a change to the optical disk are obtained. Further, note that the change may be detected-stochastically wherein, for example, a probability or likelihood measurement is computed for determining whether a change has been detected. Note that the physical change may be removing, replacing or rearranging an entire wedge extending through all layers of the optical disk. For instance, a tab on an edge on an optical disk may be broken from the optical disk as part of an initial installation. Moreover, in some cases, such errors are not only detectable, but they are also not capable of being corrected by error correction circuitry since the errors are so prevalent. However, it is also possible to detect such a change by other techniques than error detection. For example, a detachable optically readable layer may mask alternative optically readable information. Thus, by removing (and/or rearranging) the detachable optically readable layer and exposing the alternative data, a change to the optical disk can be detected.

Referring again to step 1052 of Fig. 10C, if an expected profile of the requested physical change to the optical disk has not occurred, then the installation procedure terminates (i.e., the "no" branch is taken). However, assuming that such a profile of an expected physical change is detected, step 1056 is performed wherein the installation process determines a collection of characteristics that uniquely identify the computer and the optical disk combination. For example, characteristics relating to the user's computer may be various serial numbers associated with the central processing unit, and other peripheral processors or devices. Additionally, regarding the optical disk characteristics, the installation software samples the detected changes to the optical disk in the predetermined area and subsequently encodes the locations of the changes in this predetermined area by generating one or more codes related to the optical readability of the disk in the predetermined area. Thus, by combining the characteristics of the user's computer with the encoded characteristics of the physical change to the optical disk and possibly an encoding of the user data entered, a unique encoded identifier can be generated as, e.g., a character string as described in step 1060. Note that hereinafter the unique identifier will be denoted as a "configuration fingerprint." As an aside, note that it is important that the unique physical characteristics of the optical disk be encoded into the configuration fingerprint since otherwise there is the potential for a user to use a configuration fingerprint based solely on the characteristics of the user's computer to illegally install software from optical disks of the present invention on any number of computers.

In step 1064, the configuration fingerprint is written into persistent storage on the user's computer, and additionally, the configuration fingerprint is output to the user. Subsequently, in step 1068, the installation procedure instructs the user to remove the optical disk from the computer and manually write the configuration fingerprint on the optical disk. Additionally, as described in step 1072, the user is instructed to enter the configuration fingerprint as written on the optical disk as input into the user's computer. Note that the entering of the configuration fingerprint by the user and the subsequent checking to determine whether the computed configuration fingerprint and the one entered by the user are identical provides a level of assurance that the configuration fingerprint written on the optical disk is identical to the computed configuration fingerprint. Such assurance is important since during a subsequent reinstallation attempt from the optical disk, the configuration fingerprint is recomputed and a match with a user input fingerprint is required before the software will be (re) installed on the user's computer.

Assuming that eventually the configuration fingerprints match in step 1076, step 1080 is performed wherein the installation procedure completes installation of the software from the optical disk.

Returning now to step 1028, if the installation procedure determines that in a predetermined area of the optical disk, there is indeed an occurrence of a profile of an expected change from the original optical characteristics of the optical disk as manufactured, then step 1084 is performed wherein the configuration fingerprint for the optical disk is computed as in the steps 1056 and 1060. Following this step, in step 1088, the user is instructed to enter the configuration fingerprint written on the optical disk. Thus, in step 1092, the installation procedure determines whether the computed configuration fingerprint matches the input configuration fingerprint provided by the user. Accordingly, if these two fingerprints do not match, then the installation procedure quits without fully installing the software. Alternatively, if the fingerprints, match, then the remaining portion of the installation is completed.

It is worth noting, however, that even though the software of the optical disk may not be able to be installed at a computer different from the initial installation computer, the software may be executed directly from the optical disk in the case where the software cannot be installed due to, for example, a mismatch of configuration fingerprints as determined in step 1092 above. That is, the user may be able to execute the software of the optical disk on any computer capable of reading the disk by executing the software directly from the disk.

The configuration fingerprints may not be required to exactly match in order for a complete reinstallation (step 1096 above) to be performed. In particular, as long as the configuration fingerprints are sufficiently similar, the installation process of step 1096 is performed. Thus, if the optical disk becomes scratched accidentally in the predetermined area where the expected change is to occur, and certain components of the user's computer were replaced, then the user may still be allowed to install the software on the optical disk due to a sufficient similarity between the computed configuration fingerprint and the input configuration fingerprint.

Referring now to Figs. 11A - 21B, a further collection of examples are illustrated for the purposes of comparison. These examples prohibit unrestricted duplication of information on an optical disk.

However, in these manually activated examples, the user manually effects a physical change to the optical disk during an initial use so that this change can be detected upon subsequent uses of the optical disk. Thus, as with the previous embodiments that automatically change optical states when irradiated by an optical scanning machine, there is protection against copying, duplication, unauthorized installation or use of the data on the optical disk.

In Figs. 11A - 12, a first of the manually activated examples is illustrated. In the example illustrated in these figures optical disk 1150 includes painted surface 1154 and protective lacquer layer 1158 as the uppermost surfaces. Additionally, as is typical for such disks, there is also a metalized or reflective layer 1162 and a transparent polycarbonate layer 1166. To these layers the present invention provides an extra or additional assembly 1170 for purposefully generating an expected profile of read errors on the optical disk 1150 (this additional assembly 1170 is hereinafter also denoted as a "ripcord") when this assembly is, for example, mechanically removed.

In the present example, the ripcord 1170 includes (a) a substantially tear resistant patch 1174 (best shown in Fig. 11B) embedded within the optical disk 1170, and (b) a pull tab 1178 that is firmly attached to the patch 1174. Note that in the present figure there is a bonding layer 1182 bonding the patch to the reflective layer 1162. However, in general, the patch 1174 is attached or otherwise bonded to at least one of the sides of the metalized layer 1162 and/or lacquer layer 1158 of the optical disk 1150. For instance, the patch 1174 may be screwed, glued, welded, soldered, clipped or laminated onto the optical disk 1150. Moreover, the patch 1174 and/or the pull tab 1178 may be made of metal, plastic, wood or other suitable material that does not tear easily under tension. The patch 1174 may also be manufactured as part of another layer of the optical disk 1150; e.g., the reflective layer 1162.

Note that there can be various configurations of a ripcord 1170 that can be mechanically manipulated to provide a physical change to an optical disk

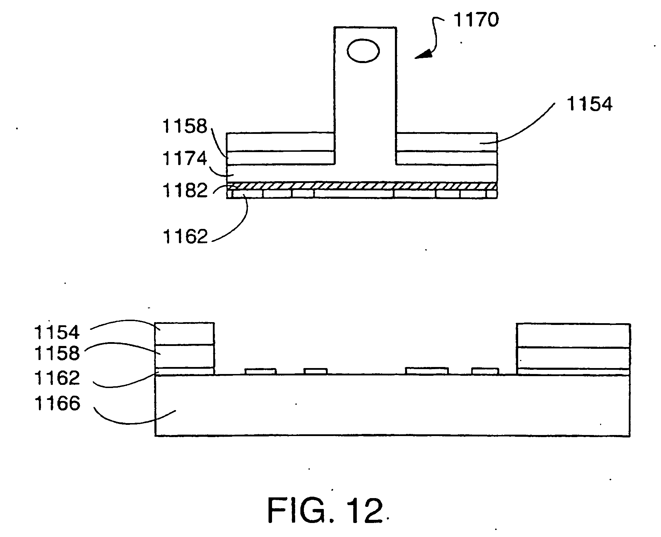

For example, such mechanical ripcords can be in the form of:
(1.1) a laminated layer with a pull tab (substantially as shown in Figs. 11A, 11B);
(1.2) an error generating push or twist button (not shown) having, for example, a particular arrangement of pins or other pointed objects that etch or scratch a surface of the optical disk 1150 when pressure and/or a twisting force is applied;
(1.3) a sticker, a strip of metal, an adhesive tape, a pin or other similar object that is effective for generating data access errors when detached from the disk.
Accordingly, when such a ripcord 1170 is removed (Fig. 12) from the optical disk or in some way moved or disturbed, the ripcord 1170 also removes, moves, damages and/or carries away with it and/or otherwise modifies the reflective characteristics of the optical disk 1150 so that the data structures thereon generate an increased number of read errors when a read access is attempted. That is, an optical reader (such as an optical readout system 10) is then unable to detect and/or access the information which is present at or near where the ripcord 1170 was located on the optical disk 1150.

In Figs. 13A - 14B, another example of a ripcord is shown, this being a "chemical ripcord" 1370 provided on optical disk 1350, wherein this disk has layers corresponding to those of optical disk 1150; i.e., painted surface 1154, lacquer layer 1158, reflective layer 1162 and polycarbonate layer 1166. The chemical ripcord 1370 is incorporated into the optical disk 1350 as an ampule, globule, sac, macroscopic or microscopic chemical carrying liposome made of plastic, wood, metal or other suitable material that can be attached, bonded, glued or laid upon the optical disk as part of the manufacturing process. For example, referring to Figs. 14A and 14B, when pressure is applied (e.g., as represented by force vector 1404), this chemical ripcord is ruptured (or moved, touched, rubbed, or otherwise disturbed) as shown in Fig. 14B. Subsequently, the chemical(s) within is released and/or activated for purposefully damaging the optical disk 1370, and in particular the reflective layer 1162, so that, for example, a greater number (or density or pattern) of optical disk read errors are generated in the area or location adjacent to the now disturbed chemical ripcord 1370. Thus, assuming an optical reader is enabled to detect and/or access the information corresponding to the data structures which are present at or near the location of the chemical ripcord 1370, the optical reader and/or application software associated with the present invention (e.g., as described in Fig. 10) can detect that the information near or adjacent to this location has changed state (e.g., from readable to unreadable) and accordingly, use this state change information for determining subsequent access and/or use of the information residing on the optical disk 1370 as, e.g., is described in Figs 10.

In Figs. 15A - 16B, two additional ripcord techniques for purposefully damaging an optical disk are illustrated, wherein a device external or unattached to the optical disk is used. Accordingly, the optical disk 1550 represented in the presently referenced figures may be a conventional optical disk with the possible exception that the painted surface 1154 may provide an indication as to where the optical disk is to be purposefully damaged. One such disk damaging technique is illustrated that uses an external device 1554 having, for example, a sharp point that can be used for mechanically and purposefully etching, scratching or otherwise damaging the optical disk 1550 as illustrated in Fig. 15B. Referring now to Figs. 16A and 16B, an alternative disk damaging technique is illustrated for a disk such as 1550. That is, in this technique, a device 1654 that is external or separate from the optical disk 1550 is used for applying a particular chemical(s) 1658 that can purposefully damage at least a portion of the optical disk 1550 so that changes to its reflective characteristics are detected by an optical disk reader. In particular, the external device 1654 disclosed has an enclosed chemical compartment 1662 from which the chemical(s) 1658 are applied to the optical disk 1550, wherein the chemical(s) reacts with the optical disk 1550 for removing or damaging the reflective characteristics of the optical disk so that a greater number of read errors are generated in a predetermined area where the chemical(s) is applied.

Accordingly, in the examples of Figs. 15 and 16, an optical reader may be unable to detect or access a substantial amount of the information corresponding to the data structures at or near the use of the external device. Also, the optical reader (and/or other components or modules used in the accessing or processing of information from the optical disk 1550) may determine that the information on the optical disk has changed states (e.g. an indication of a prior use) according to the access errors detected in the predetermined area where the external device was applied (as in step 1052, Fig. 10B).
Additionally, note that an external device as 1554 or 1654 may also include a pin (or other sharp instrument) for both physically and chemically damaging the disk. Moreover, other examples for purposefully damaging an optical disk include the following : a pad, a scratch inducing swatch, or, in a chemical application example, a liposome carrying paste, a receptacle for holding two or more chemical compounds in separate chambers for purposefully damaging (more generally, changing) optical characteristics of the disk when the two or more compounds are combined.

Thus, as described in Figs. 10, once the optical disk is physically changed, altered or otherwise damaged (e.g., step 1044, Fig. 10B) by any of the above techniques, separately or in combination, the user's computer system may then determine the extent to which the information on the optical disk can be accessed or used in a user desired action. That is, the change and/or damage to the optical disk provides a recognizable state change to, for example, the access routines (e.g., installation programs) associated with the optical disk and/or any software: application thereon so that a determination can be made as to whether the information on the optical disk has been previously accessed. In addition, such a change and/or damage to the optical disk also provides a user with a visible indication that the data on the optical disk has been accessed. More generally, the purposefully altering or changing of the optical disk provides a mechanism for determining a history of the use of the optical disk, both computationally and by visual inspection of the optical disk.

In Figs. 17A - 21B, converse examples to the purposefully damaging examples above are illustrated. That is, instead of the ripcord removing information from the optical disk (when the ripcord is manipulated and/or activated), the ripcord in the present examples allows additional or different optical disk information to become available (i.e., readable) when the ripcord is manipulated or activated. Thus, in these converse examples, instead of the read errors increasing according to an expected profile in a predetermined area of the optical disk, the read errors may decrease according to an expected profile. That is, the ripcord may initially hide or mask the information on the optical disk with a substantially unreadable covering. However, such a ripcord covering may be readable and provide different information than that on the optical disk. For example, an optical disk may contain one or more movies for viewing and the ripcord itself may provide information necessary for allowing the movies to be viewed. Thus, once the ripcord is removed, thereby providing access to alternative information, the movie(s) may be viewed only once. Thus, in this example, a detection of a state change is performed without necessarily detecting an expected profile related to generated access errors. It is also worth mentioning here that, as one skilled in the art will understand, similar capabilities may be provided with other duplication protection examples. For example, by using an optical disk coating that changes from opaque to transparent due to, e.g., laser light from an optical disk reader, purposefully masked information on the optical disk can become readable and concomitantly causing a reduction in the number of errors detected and therefore providing a detectable state change in the optical disk.

Referring now specifically to Figs. 17A and 17B (where an optical disk 1750 is shown having similar layers labeled similarly to previous figures), a ripcord is attached or bonded to the exterior surface of the polycarbonate 1166 of an optical disk 1750; e.g., the ripcord 1770 may be laminated, screwed, glued, welded, soldered or clipped to the optical disk 1750. Moreover, the ripcord 1770 may include metal, plastic, wood, paper or other suitable material for hiding information encoded on the reflective layer 1182 of the optical disk 1750. Additionally, note that the ripcord 1770 may be manufactured as part of the optical disk, and can be in the form of a button, sticker, metal strip, adhesive tape, paper patch or other optical disk information mask (or optical distorter) capable of being removed or rendered transparent to the laser light of the optical reader. Accordingly, when the ripcord 1770 of the present , example is removed (Fig. 18) from the optical disk 1750 or in some way moved or disturbed, additional (or alternative) information on the optical disk 1750 becomes readable. Thus, an optical disk reader is then able to detect and/or access this information at or near the previous ripcord location on the optical disk.

Note that additional converse examples may also be provided using a chemical approach. Referring to Figs. 19A and I9B (where an optical disk 1950 is shown having similar layers labelled similarly to previous figures), a ripcord 1950 herein includes a chemical carrying container (e.g., an ampule, globule, sac or liposome) attached, bonded, glued or combined with the optical disk 1950 during manufacture. Accordingly, as illustrated in Fig. 20, when this chemical container is removed, disturbed or ruptured, the enclosed chemical(s) is released and/or activated for modifying the reflective characteristics of the optical disk 1950 so that this information becomes readable. For example, the chemical sac of the ripcord 1970 may be glued to the exterior surface of the polycarbonate layer with an opaque or colored glue, wherein the chemical(s) within the chemical sac is a solvent for the glue thereby allowing the chemical sac and the glue to be removed when the sac is ruptured and the solvent released. Thus, an optical reader is subsequently able to detect and/or access the information corresponding to the data structures on the optical disk 1450 which are present at or near the previous location of the ripcord 1970 on the optical disk. Moreover, such a change to an optical disk allows the optical reader (and/or other optical disk accessing components or modules) as well as a person, via visual inspection, to determine that a state change has occurred to the optical disk 1950.

In Figs. 21A and 21B, an example of the optical disk 1750 (Figs. 17) is illustrated wherein an external device 2104 is used for applying a chemical(s) to the optical disk, thereby removing the mask or ripcord 1770 attached to the surface of the optical disk 1750 so that optical disk information hidden by the ripcord 1770 is able to be read. Note that the external device 2104 here can be in the form of, for example, a pin, pad, swatch or liposome carrying paste or liquid, wherein the ripcord is either rendered transparent or removed.

In a further collection of comparative examples, an authentication method and apparatus are provided for authenticating an optical disk. The examples provide optical disks with purposefully-induced data access errors incorporated therein during manufacturing or at least prior to mass distribution. Moreover, also included in each individual optical disk is authentication information indicating the location of these purposefully induced errors. Thus, when the authentication information accurately identifies the locations of the purposefully induced errors, then the optical disk is assumed to be authentic rather than an illegitimate copy. Note that one particularly noteworthy example is provided by attaching "microdots", i.e., microscopic unreadable dots or patches, at various locations throughout the information encoded on an optical disk. Accordingly, if the microdots are sufficiently small so that they obscure or distort only a small area of the optical disk (e.g., less than approximately 300 microns) then error correction circuitry included within an optical disk access device may be able to correct such errors transparently to a user of the optical disk. Alternatively, for many applications, such as audio (e.g., musical) presentations, the optical disk information is encoded on the disk redundantly. Thus, even larger microdots may be incorporated without affecting the quality of a presentation of the information accessed from the optical disk.

In a still further collection of comparative examples, effectively non-reproducible transaction cards for financial transactions can be provided by the present invention. That is, an optical medium (such as a portion of an optical disk material) is provided on a transaction card along with a mechanism, such as a ripcord, for purposefully damaging the optical medium. Thus, prior to issuing such a transaction card to a user, the optical medium is purposefully damaged, and the financial institution stores an encoding of a mapping of the damaged and/or undamaged areas of the optical medium. Subsequently, the user is provided with the damaged transaction card. Thus, whenever a transaction is performed with the transaction card, the damaged optical medium thereon is optically sampled for determining if the samples are consistent with the encoded mapping stored by the financial institution. If so, then the transaction may be allowed. If not, then the transaction is canceled.

In a yet further collection of comparative examples, authentication of a user requesting a financial transaction is provided. In one such example, a compound that is, for instance, sensitive to touch (e.g., oil reactive, heat sensitive and/or amino acid sensitive) may be layered or coated on an optical medium included on a transaction card (e.g., credit card). Thus, assuming the touch sensitive compound (e.g., a polymer) is sufficiently sensitive so that a user's fingerprint is reliably and accurately duplicated on the compound thereby causing a change in the optical characteristics of the optical medium, then once a fingerprint is provided on the touch sensitive compound, it can be optically sampled for sensing changes in the readability of the optical medium underneath the compound. Thus, assuming the financial institution or some other independent third party has access to a previously stored representation of the user's fingerprint, a computational determination can be made as to whether the samples are consistent with the stored representation. Moreover, if the touch sensitive compound is reversible in that the compound only retains an image of the fingerprint for a relatively short time period (e.g., one to five minutes), then there may be high confidence that a match of the optical medium samples with the stored fingerprint representation corresponds with a verification of the user's identity. That is, such a match likely implies that a legitimate user of the card recently had the transaction card in his/her possession.

In a related example, the identity of a user desiring to perform an electronic transaction on the Internet may be verified. For example, by providing a predetermined area of an optical disk with a touch sensitive compound as above for temporarily retaining an image of a fingerprint, the identity of an Internet user can be verified. That is, upon commencing an Internet financial transaction, the steps of the flow chart of Fig. 22 may be performed. Accordingly, in step 2204, an Internet user desiring to perform such a financial transaction is instructed to locate an optical disk of the present invention for Internet user verification wherein this disk includes a predetermined area having the touch sensitive compound. Subsequently, in step 2208, the user provides an imprint of his/her fingerprint (or other body part) on the predetermined touch sensitive area of the optical disk. Following this, in step 2212, the user then inserts the optical disk into an optical disk access device (such as a conventional optical disk peripheral attached to the user's Internet computer). Next, in step 2216, a process is activated on the user's Internet access device for optically sampling the predetermined touch sensitive area of the optical disk. Then, in step 2220, an encoding of the samples is transmitted to the particular Internet node responsible for determining the authenticity of the transaction. Thus, in step 2224, this particular Internet node compares the samples with a previously stored representation of the user's fingerprint for determining whether the samples are consistent with the fingerprint representation. Accordingly, if the samples are sufficiently consistent, then the transaction is completed as in step 2228. Alternatively, if this is not the case, then the transaction is voided as in step 2232.

In a final collection of comparative examples, information related to an item can be encoded on a time sensitive optical medium that changes optical characteristics over time so that the information transforms from readable to unreadable, or from unreadable to readable. In particular, certain compounds such as are disclosed above relating to the embodiments of the present invention may be utilized in the present collection of examples. For example, certain time sensitive items may require corresponding data for labeling, identifying and/or documenting of the items. For instance, such items may be cashier's checks or money orders that must be used in a financial transaction in a predetermined time period. That is, by using the present invention, bank routing numbers or other fields may be provided on a time sensitive polymer that becomes unreadable after a predetermined time has expired. Thus, prior to becoming unreadable, such identification data may be read by an automatic or computerized check clearing system, whereas after a predetermined time of, e.g., light exposure and/or oxygen exposure, the data becomes unreadable. Additionally, event tickets and/or time sensitive medical supplies may also be similarly labeled with polymers.

Accordingly, the present invention has been described at some degree of particularity directed to the exemplary embodiments of the present invention.

## Claims

1. An optical disk (50) adapted for use in an optical readout system (10) that includes a light source (20) operative to produce an interrogating beam of light for reading data structures, comprising:
(a) a reflective layer (56) encoded with information stored thereon as a plurality of data structures (58) that are readable by an interrogating beam of light;
(b) a substrate (52) disposed in a confronting relationship with said reflective layer; and
(c) a reactive material (60) superimposed over at least some of said data structures, said reactive material selected to be of a type that is operative to change, automatically and after an accumulated duration of time, at least one optical property or physical property in response to a stimulus, wherein said change in at least one optical property or physical property in response to said stimulus interferes with said optical readout system reading at least some of said data structures, and said change in at least one optical property or physical property is not reversible.

2. The optical disk according to claim 1, wherein said reactive material is operative to change between:
(a) an optically transparent state wherein a sufficient amount of said interrogating beam of light penetrating said reactive material reflects from the data structures encoded on said reflective layer so that said data structures can be read; and
(b) an optically opaque state (62) wherein there is an insufficient amount of said interrogating beam of light penetrating said reactive material for reading the data structures via reflections of said interrogating beam of light so that at least some of said data structures cannot be read.

3. The optical disk according to claim 1 or claim 2, wherein said change is in response to a stimulus for affecting the readability of said at least some data structures by the interrogating beam of light.

4. The optical disk according to any preceding claim wherein said reactive material is interposed anywhere along the optical path of said interrogating beam of light.

5. The optical disk according to any preceding claim wherein said reflective layer is contoured to include a sequence of pits (59) and lands (57) which define said plurality of data structures, said reactive agent superimposed over at least some of said pits and lands.

6. The optical disk according to any preceding claim wherein said reactive material is supported on an outer surface of said substrate and has a thickness in a range of approximately 0.14 to 0.6 microns.

7. The optical disk according to any one of claims 1 to 6 wherein said stimulus is selected from a group consisting of visible light, infrared light, an ambient environment containing light and oxygen, water vapour and air, and combinations thereof.

8. The optical disk according to claim 6 wherein said stimulus is light and wherein said reactive material includes a photoreactive material that changes its chemical composition when at least exposed to air.

9. The optical disk according to claim 8 wherein said reactive material is selected from a spiropyran class of photochromic compounds.

10. The optical disk according to any one of claims 1 to 6 wherein said stimulus is an ambient environment containing light and oxygen and wherein said reactive material has the chemical formula:

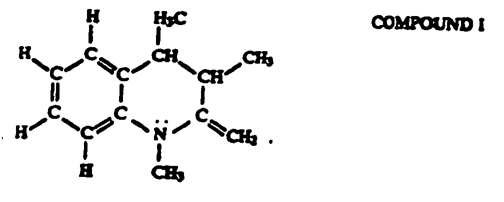

11. The optical disk according to any one of claims 1 to 6 wherein said stimulus is an ambient environment containing light and oxygen and wherein said reactive material has the chemical formula:

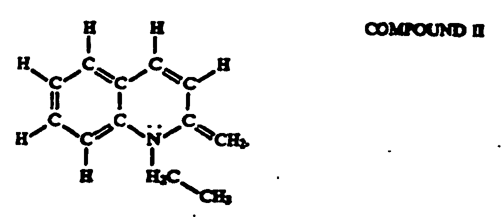

12. The optical disk according to any one of claims 1 to 6 wherein said stimulus is air and wherein said reactive material is operative after an accumulated duration of time to oxidize and change said state of the reactive material.

13. The optical disk according to any one of claims 1 to 6 wherein said reactive material absorbs light having a wavelength within a predetermined range effective for facilitating a change between the transparent and opaque states of said reactive material.

14. The optical disk according to claim 13 wherein said wavelength is approximately 780 nanometers (nm).

15. The optical disk according to claim 13 wherein said wavelength is approximately 650 nanometers (nm).

16. The optical disk according to claim 12 wherein said reactive material is a chemically reduced form of a dye.

17. The optical disk according to claim 16 wherein said reactive material is selected from a group of dyes consisting of methylene blue, brilliant cresyl blue, basic blue 3 and toluidine blue 0.

18. The optical disk according to any one of claims 1 to 6 wherein said reactive material is responsive to irradiation by the interrogating beam for an accumulated duration of time to intentionally change a chemical characteristic of said reactive material when said reactive material changes between noninterference with the optical readout system reading said data structures to interfering with the optical readout system reading at least some of said data structures.

19. A method of limiting access to data stored on an optical disk (50) having:(a) a substrate (52), (b) a reflective layer (56) encoded with information stored thereon as a plurality of data structures (58) that are capable of being read by detecting optical reflections from said reflective layer; and (c) a reactive material (60) through which radiation passes prior to being reflected for reading at least some of said data structures, said method comprising:
activating said reactive material, wherein said reactive material changes, automatically and after an accumulated duration of time, at least one optical property or physical property in response to a stimulus, wherein said change in at least one optical property or physical property in response to said stimulus interferes with reading at least some of said data structures and said change in at least one optical property or physical property is not reversible;
providing an optical disk reader (10) for reading said optical disk, wherein said information stored on said optical disk is read by detecting reflections of radiation directed at said reflective layer;
allowing said information to be read when said reactive material does not interfere with an interrogating beam of radiation of the optical disk reader, and
prohibiting access to said information stored thereon when said reactive material interferes with the interrogating beam of the optical disk reader.

20. The method according to claim 19, wherein said optical disk reader is a read-only device.

21. The method according to claim 19 or claim 20, wherein said step of activating said reactive material is performed during a reading of said information from said optical disk.

22. The method according to any one of claims 19 to 21, wherein said reading of said information is performed by rotating said optical disk in a disk drive (12) at a selected rotational speed and directing an interrogating beam of light having a beam wavelength that is within a selected range toward at least a portion of an area coincident with said substrate and said reflective layer encoded with information stored thereon as a plurality of readable data structures and through said reactive material for an accumulated duration of time.

23. The method according to any one of claims 19 to 21, wherein said reactive material changes between an optically transparent state, wherein effective reading of the information is capable of being performed by detecting optical reflections of the radiation and an optically opaque state (62), wherein for at least a predetermined portion of said information, said optical reflections of said portion are sufficiently reduced so as to preclude reading of said information.

24. The method according to claim 23 wherein said interrogating beam is directed toward said area for a continuous interval of time that is sufficient to cause said change in optical state.

25. The method according to claim 23 wherein said interrogating beam is directed toward said area for a plurality of discrete intervals of time, wherein each of said discrete intervals are spaced apart in time from one another, and wherein no single one of said intervals is sufficient to cause said change in optical state, but an accumulation of a length of time of said intervals is sufficient to cause said change.

26. The method according to any one of claims 22 to 25 wherein said beam wavelength is approximately 780 nanometers (nm).

27. The method according to any one of claims 22 to 25 wherein said beam wavelength is approximately 650 nanometers (nm).

28. The method according to claim 23 wherein said step of directing said interrogating beam toward said area is accomplished by selectively advancing said interrogating beam radially across an outermost surface of said optical disk until said interrogating beam interacts with said reactive material for a plurality of discrete intervals of time sufficient to cause said change in optical state.

29. The method according to any one of claims 22 to 25 wherein said beam has an intensity of approximately 1 milliwatt (mW) of power.

30. The method according to claim 29 wherein said beam wavelength is approximately 780 nanometers (nm).

31. The method according to claim 22 or claim 23, wherein said step of directing purposefully oxidizes said reactive material.

32. The method according to any one of claims 19 to 21, wherein said reactive material changes between an optically transparent state effective for reading the data structures stored coincidentally with said portion of said area, and an optically opaque state (62) that inhibits reading at least some of the data structures stored coincidentally with said portion of said area.

33. The method according to claim 22, wherein said reactive material is operative in an ambient environment containing oxygen for reacting with the oxygen to change an optical transmission from said area in response to irradiation for an accumulated duration of time by light having a beam wavelength within a selected range.

## Patentansprüche

1. Optische Platte (50), angepaßt für die Verwendung in einem optischen Lesesystem (10), das eine Lichtquelle (20) beinhaltet, die betreibbar ist, um einen Abfragelichtstrahl für das Lesen von Datenstrukturen zu erzeugen, wobei die Platte aufweist:
(a) eine reflektierende Schicht (56), die mit Information, die hierauf als eine Mehrzahl von Datenstrukturen (58) gespeichert ist, die von einem Abfragelichtstrahl lesbar sind, codiert ist,
(b) ein Substrat (52), das in einer gegenüberstehenden Beziehung mit der reflektierenden Schicht steht, und
(c) ein reaktives Material (60), das über zumindest einigen der Datenstrukturen aufgebracht ist, wobei das reaktive Material von einem Typ ist, der betreibbar ist, um automatisch und nach einer angesammelten Zeitdauer zumindest eine optische Eigenschaft oder physikalische Eigenschaft in Antwort auf einen Auslöseimpuls zu ändern, wobei die Veränderung in zumindest einer optischen Eigenschaft oder einer physikalischen Eigenschaft in Antwort auf den Auslöseimpuls in das Auslesen des optischen Auslesesystems von zumindest einigen der Datenstrukturen eingreift und wobei die Veränderung in zumindest einer optischen Eigenschaft oder einer physikalischen Eigenschaft nicht reversibel ist.

2. Optische Platte nach Anspruch 1, bei der das reaktive Material betreibbar ist, um zwischen
(a) einem optisch transparenten Zustand, bei dem eine ausreichende Menge des Abfragelichtstrahls, der das reaktive Material durchdringt, von den Datenstrukturen, die auf der reflektierten Schicht codiert sind, reflektiert wird, so daß die Datenstrukturen gelesen werden können, und
(b) einem optisch opaken Zustand (62), in dem es eine nicht ausreichende Menge des Abfragelichtstrahls gibt, die das reaktive Material für das Lesen der Datenstrukturen über Reflexionen des Abfragelichtstrahls durchdringt, so daß zumindest einige der Datenstrukturen nicht gelesen werden können, zu wechseln.

3. Optische Platte nach Anspruch 1 oder Anspruch 2, wobei die Veränderung bzw. der Wechsel in Antwort auf einen Auslöseimpuls erfolgt für das Bewirken der Lesbarkeit von zumindest einigen Datenstrukturen durch den abfragenden Lichtstrahl.

4. Optische Platte nach einem der vorherigen Ansprüche, wobei das reaktive Material irgendwo entlang des optischen Pfades des Abfragelichtstrahls eingefügt ist.

5. Optische Platte nach einem der vorherigen Ansprüche, wobei die reflektive Schicht konturiert ist, so daß sie eine Abfolge von Pits (59) und Lands (57) beinhaltet, die die Mehrzahl von Datenstrukturen bilden, wobei das reaktive Mittel über zumindest einige der Pits und Lands überlagert ist.

6. Optische Platte nach einem der vorherigen Ansprüche, bei der das reaktive Material an einer äußeren Fläche des Substrats gestützt wird und eine Dicke in einem Bereich von näherungsweise 0,14 bis 0,6 µm hat.

7. Optische Platte nach einem der Ansprüche 1 bis 6, bei der der Auslösereiz ausgewählt ist aus einer Gruppe, die besteht aus sichtbarem Licht, Infrarotlicht, einer Außenumgebung, die Licht und Sauerstoff, Wasserdampf und Luft und Kombinationen hiervon enthält.

8. Optische Platte nach Anspruch 6, bei der der Auslösereiz Licht ist und wobei das reaktive Material ein photoreaktives Material beinhaltet, das seine chemische Zusammensetzung zumindest dann ändert, wenn es Luft ausgesetzt ist.

9. Optische Platte nach Anspruch 8, wobei das reaktive Material ausgewählt ist aus einer Spiropyranklasse von photochromen Verbindungen.

10. Optische Platte nach einem der Ansprüche 1 bis 6, bei der der Auslösereiz eine Außenumgebung ist, die Licht und Sauerstoff enthält, und wobei das reaktive Material die chemische Formel hat:

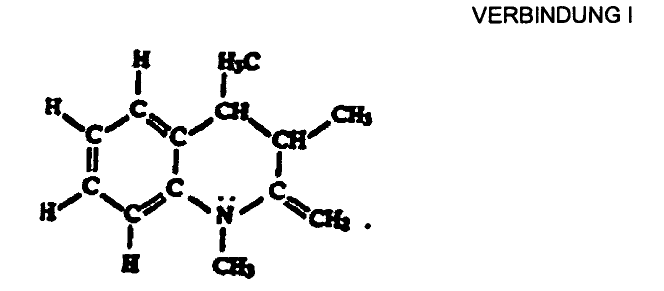

11. Optische Platte nach einem der Ansprüche 1 bis 6, bei der der Auslösereiz eine Außenumgebung ist, die Licht und Sauerstoff enthält, und wobei das reaktive Material die chemische Formel hat:

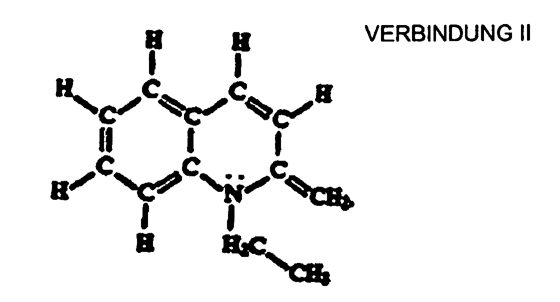

12. Optische Platte nach einem der Ansprüche 1 bis 6, bei der der Auslösereiz Luft ist und wobei das reaktive Material betreibbar ist, so daß es nach einer angesammelten Zeitdauer oxidiert und den Zustand des reaktiven Materials verändert.

13. Optische Platte nach einem der Ansprüche 1 bis 6, bei der das reaktive Material Licht mit einer Wellenlänge innerhalb eines vorbestimmten Bereichs, der wirksam für das Unterstützen einer Veränderung zwischen dem transparenten und opaken Zustand des reaktiven Materials absorbiert.

14. Optische Platte nach Anspruch 13, bei der die Wellenlänge näherungsweise 780 Nanometer (nm) beträgt.

15. Optische Platte nach Anspruch 13, bei der die Wellenlänge näherungsweise 650 Nanometer (nm) beträgt.

16. Optische Platte nach Anspruch 12, bei der das reaktive Material eine chemisch reduzierte Form eines Farbstoffs ist.

17. Optische Platte nach Anspruch 16, bei der das reaktive Material ausgewählt ist aus einer Gruppe von Farbstoffen, die besteht aus Methylenblau, Brilliantkresylblau, Basischblau 3 und Toluidinblau 0.

18. Optische Platte nach einem der Ansprüche 1 bis 6, bei der das reaktive Material auf Bestrahlung durch den Abfragestrahl für eine Gesamtzeitdauer reagiert, um absichtlich eine chemische Eigenschaft des reaktiven Materials zu verändern, wenn sich das reaktive Material zwischen der Nichtbeeinflussung des optischen Auslesesystems, das die Datenstrukturen liest, in das Beeinflussen des optischen Auslesesystems, das zumindest einige der Datenstrukturen ausliest, verändert.

19. Verfahren zum Beschränken des Zugriffs auf Daten, die gespeichert sind auf einer optischen Platte (50) mit: (a) einem Substrat (52), (b) einer reflektierenden Schicht (56), die mit Informationen codiert ist, die hierauf abgelegt sind als Mehrzahl von Datenstrukturen (58), die gelesen werden können durch Erfassen von optischen Reflexionen von der reflektierenden Schicht, und (c) einem reaktiven Material (60), durch das Strahlung hindurchtritt, bevor es für das Auslesen von zumindest einigen der Datenstrukturen reflektiert wird, wobei das Verfahren aufweist:
Aktivieren des reaktiven Materials, wobei das reaktive Material automatisch und nach einer akkumulierten Zeitdauer zumindest eine optische Eigenschaft oder eine physikalische Eigenschaft in Antwort auf einen Auslöseimpuls ändert, wobei die Veränderung in zumindest einer optischen Eigenschaft oder einer physikalischen Eigenschaft in Antwort auf den Auslöseimpuls das Lesen von zumindest einigen der Datenstrukturen beeinflußt bzw. stört und wobei die Veränderung in zumindest einer optischen oder physikalischen Eigenschaft nicht reversibel ist,
Bereitstellen eines optischen Plattenlesers (10) für das Lesen der optischen Platte, wobei die Information, die auf der optischen Platte gespeichert ist, gelesen wird durch Erfassen von Reflexionen von Strahlung, die auf die reflektierte Schicht gerichtet wird,
Erlauben, daß die Information gelesen wird, wenn das reaktive Material nicht den Abfragestrahl des optischen Plattenlesers stört, und
Verhindern des Zugriffs auf die Information, die hierauf gespeichert ist, wenn das reaktive Material den Abfragestrahl des optischen Plattenlesers beeinflußt bzw. stört.

20. Verfahren nach Anspruch 19, wobei der optische Plattenleser eine Nur-Lese-Einrichtung ist.

21. Verfahren nach Anspruch 19 oder Anspruch 20, wobei der Schritt des Aktivierens des reaktiven Materials während eines Lesens der Information von der optischen Platte durchgeführt wird.

22. Verfahren nach einem der Ansprüche 19 bis 21, wobei das Lesen der Information durchgeführt wird durch Rotieren der optischen Platte in einem Plattenlaufwerk (12) mit einer ausgewählten Rotationsgeschwindigkeit und durch Richten eines Abfragelichtstrahls für eine akkumulierte Zeitdauer mit einer Strahlwellenlänge, die innerhalb eines ausgewählten Bereichs liegt, auf zumindest einen Abschnitt eines Bereichs, der mit dem Substrat und der reflektierenden Schicht, die mit Information codiert ist, die hierauf als eine Mehrzahl von lesbaren Datenstrukturen gespeichert ist, übereinstimmt, und durch das reaktive Material.

23. Verfahren nach einem der Ansprüche 19 bis 21, wobei das reaktive Material eine Veränderung zwischen einem optisch transparenten Zustand, in dem das effektive Lesen der Information durchgeführt werden kann durch Erfassen der optischen Reflexion der Strahlung, und einem optisch opaken Zustand (62), in dem für zumindest einen vorbestimmten Teil der Information die optischen Reflexionen dieses Teils ausreichend reduziert sind, um das Lesen der Information auszuschließen.

24. Verfahren nach Anspruch 23, wobei der Abfragestrahl während eines kontinuierüchen Zeitintervalls auf den Bereich gerichtet ist, das ausreichend ist, um die Veränderung im optischen Zustand zu bewirken.

25. Verfahren nach Anspruch 23, bei dem der Abfragestrahl auf das Gebiet während einer Mehrzahl von diskreten Zeitintervallen gerichtet wird, wobei die diskreten Intervalle zeitlich voneinander beabstandet sind und wobei ein einzelnes der Intervalle nicht ausreichend ist, um die Veränderung im optischen Zustand zu bewirken, jedoch eine Ansammlung von Zeitlängen der Intervalle ausreichend ist, um die Veränderung zu bewirken.

26. Verfahren nach einem der Ansprüche 22 bis 25, bei dem die Strahlwellenlänge näherungsweise 780 Nanometer (nm) beträgt.

27. Verfahren nach einem der Ansprüche 22 bis 25, bei dem die Strahlwellenlänge näherungsweise 650 Nanometer (nm) beträgt.

28. Verfahren nach Anspruch 23, bei dem der Schritt des Richtens des Abfragestrahls auf den Bereich verwirklicht wird durch selektives Vorrücken des Abfragestrahls radial über eine äußere Oberfläche der optischen Platte, bis der Abfragestrahl mit dem reaktiven Material für eine Mehrzahl von diskreten Zeitintervallen wechselwirkt, die ausreichend sind, um die Veränderung im optischen Zustand zu bewirken.

29. Verfahren nach einem der Ansprüche 22 bis 25, bei dem der Strahl eine Intensität von näherungsweise 1 Milliwatt (mW) Leistung hat.

30. Verfahren nach Anspruch 29, wobei die Strahlwellenlänge näherungsweise 780 Nanometer (nm) beträgt.

31. Verfahren nach Anspruch 22 oder Anspruch 23, wobei der Schritt des Richtens zielgerichtet das reaktive Material oxidiert.

32. Verfahren nach einem der Ansprüche 19 bis 21, wobei das reaktive Material sich zwischen einem optisch transparenten Zustand, der für das Lesen der Datenstrukturen, die koinzident mit dem Abschnitt dieses Bereichs gespeichert sind, effektiv ist, und einem optisch opaken Zustand (62), der das Lesen von zumindest einigen der Datenstrukturen, die koinzident mit dem Abschnitt dieses Bereichs gespeichert sind, verhindert.

33. Verfahren nach Anspruch 22, wobei das reaktive Material in einer Außenumgebung betreibbar ist, die Sauerstoff enthält, für das Reagieren mit dem Sauerstoff, um eine optische Transmission von dem Bereich in Antwort auf eine Bestrahlung für eine angesammelte Zeitdauer durch Licht mit einer Wellenlänge innerhalb eines ausgewählten Bereichs zu verändern.

## Revendications

1. Disque optique (50) conçu pour une utilisation dans un système de lecture optique (10) qui comprend une source de lumière (20) pouvant être mise en oeuvre pour produire un faisceau lumineux d'interrogation destiné à lire des structures de données, comportant :
(a) une couche réfléchissante (56) codée avec une information stockée sur elle sous forme de plusieurs structures de données (58) pouvant être lues par un faisceau lumineux d'interrogation ;
(b) un substrat (52) disposé face à ladite couche réfléchissante ; et
(c) une matière réactive (60) superposée sur au moins certaines desdites structures de données, ladite matière réactive étant choisie de façon à être d'un type qui agit de manière à changer, automatiquement et après une durée cumulée, au moins une propriété optique ou une propriété physique en réponse à un stimulus, dans lequel ledit changement d'au moins une propriété optique ou une propriété physique en réponse audit stimulus interfère avec ledit système de lecture optique lisant au moins certaines desdites structures de données, et ledit changement d'au moins une propriété optique ou une propriété physique n'est pas réversible.

2. Disque optique selon la revendication 1, dans lequel ladite matière réactive agit de façon à produire un changement entre :
(a) un état optiquement transparent dans lequel une quantité suffisante dudit faisceau lumineux d'interrogation pénétrant dans ladite matière réactive est réfléchie par les structures de données codées sur ladite couche réfléchissante de manière que lesdites structures de données puissent être lues ; et
(d) un état optiquement opaque (62) dans lequel il y a une quantité insuffisante dudit faisceau lumineux d'interrogation pénétrant dans ladite matière réactive pour lire les structures de données au moyen de réflexions dudit faisceau lumineux d'interrogation, afin qu'au moins certaines desdites structures de données ne puissent pas être lues.

3. Disque optique selon la revendication 1 ou la revendication 2, dans lequel ledit changement est en réponse à un stimulus destiné à affecter la lisibilité desdites, au moins certaines, structures de données par le faisceau lumineux d'interrogation.

4. Disque optique selon l'une quelconque des revendications précédentes, dans lequel ladite matière réactive est interposée en un point quelconque le long du chemin optique dudit faisceau lumineux d'interrogation.

5. Disque optique selon l'une quelconque des revendications précédentes, dans lequel ladite couche réfléchissante est contournée de façon à comprendre une séquence de microcuvettes (59) et de plats (57) qui définissent ladite pluralité de structures de données, ledit agent réactif étant superposé sur au moins certains desdits microcuvettes et plats.

6. Disque optique selon l'une quelconque des revendications précédentes, dans lequel ladite milieu réactionnel est supportée sur une surface extérieure dudit substrat et a une épaisseur dans une plage d'environ 0,14 à 0,6 micromètre.

7. Disque optique selon l'une quelconque des revendications 1 à 6, dans lequel ledit stimulus est sélectionné dans un groupe consistant en de la lumière visible, de la lumière infrarouge, un environnement ambiant contenant de la lumière et de l'oxygène, de la vapeur d'eau et de l'air, et des combinaisons de ceux-ci.

8. Disque optique selon la revendication 6, dans lequel ledit stimulus est de la lumière, et dans lequel ladite matière réactive comprend une matière photoréactive dont la composition chimique change lorsqu'elle est au moins exposée à l'air.

9. Disque optique selon la revendication 8, dans lequel ladite matière réactive est sélectionnée parmi des composés photochromes consistant en spiropyrannes.

10. Disque optique selon l'une quelconque des revendications 1 à 6, dans lequel ledit stimulus est un environnement ambiant contenant de la lumière et de l'oxygène, et dans lequel ladite matière réactive a la formule chimique :

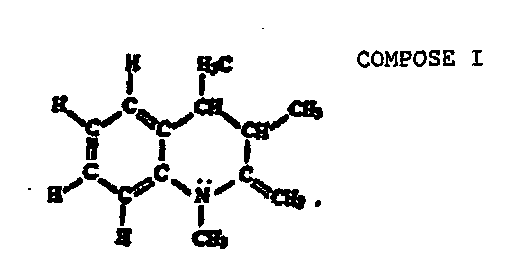

11. Disque optique selon l'une quelconque des revendications 1 à 6, dans lequel ledit stimulus est un milieu ambiant contenant de la lumière et de l'oxygène, et dans lequel ladite matière réactive a la formule chimique :

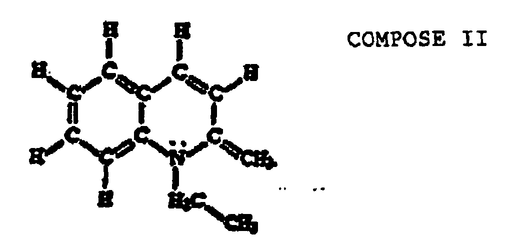

12. Disque optique selon l'une quelconque des revendications 1 à 6, dans lequel ledit stimulus est de l'air, et dans lequel ladite matière réactive agit après une durée de temps cumulée pour oxyder et changer ledit état de ladite matière réactive.

13. Disque optique selon l'une quelconque des revendications 1 à 6, dans lequel ladite matière réactive absorbe de la lumière ayant une longueur d'onde dans une plage prédéterminée ayant pour effet de faciliter un changement entre les états transparent et opaque de ladite matière réactive.

14. Disque optique selon la revendication 13, dans lequel ladite longueur d'onde est d'environ 780 nanomètres (nm) .

15. Disque optique selon la revendication 13, dans lequel ladite longueur d'onde est d'environ 650 nanomètres (nm) .

16. Disque optique selon la revendication 12, dans lequel ladite matière réactive est une forme chimiquement réduite d'un colorant.

17. Disque optique selon la revendication 16, dans lequel ladite matière réactive est sélectionnée dans un groupe de colorants consistant en du bleu de méthylène, du bleu de crésyl brillant, du bleu basique 3 et du bleu de toluidine 0.

18. Disque optique selon l'une quelconque des revendications 1 à 6, dans lequel ladite matière réactive réagit à une irradiation par le faisceau lumineux d'interrogation pendant une durée de temps cumulée pour changer volontairement une caractéristique chimique de ladite matière réactive lorsque ladite matière réactive change entre une non-interférence avec le système de lecture optique lisant lesdites structures de données en une interférence avec le système de lecture optique lisant au moins certaines desdites structures de données.

19. Procédé de limitation de l'accès à des données stockées sur un disque optique (50) ayant : (a) un substrat (52), (b) une couche réfléchissante (56) codée avec une information stockée sur elle sous la forme d'une pluralité de structures de données (58) pouvant être lues par la détection de réflexions optiques depuis ladite couche réfléchissante, et (c) une matière réactive (60) à travers laquelle un rayonnement passe avant d'être réfléchi pour la lecture d'au moins certaines desdites structures de données, ledit procédé comprenant :
l'activation de ladite matière réactive, dans laquelle ladite matière réactive change, automatiquement et après une durée de temps cumulée, au moins une propriété optique ou une propriété physique en réponse à un stimulus, ledit changement d'au moins une propriété optique ou une propriété physique en réponse audit stimulus interférant avec la lecture d'au moins certaines desdites structures de données et ledit changement d'au moins une propriété optique ou une propriété physique n'étant pas réversible ;
l'utilisation d'un lecteur (10) de disque optique pour la lecture dudit disque optique, ladite information stockée sur ledit disque optique étant lue en détectant des réflexions d'un rayonnement dirigé sur ladite couche réfléchissante ;
le fait de permettre à ladite information d'être lue lorsque ladite matière réactive n'interfère pas avec un faisceau de rayonnement d'interrogation du lecteur de disque optique ; et
l'empêchement de l'accès à ladite information stockée sur lui lorsque ladite matière réactive interfère avec le faisceau d'interrogation du lecteur de disque optique.

20. Procédé selon la revendication 19, dans lequel ledit lecteur de disque optique est un dispositif de lecture seule.

21. Procédé selon la revendication 19 ou la revendication 20, dans lequel ladite étape d'activation de ladite matière réactive est effectuée pendant une lecture de ladite information à partir dudit disque optique.

22. Procédé selon l'une quelconque des revendications 19 à 21, dans lequel ladite lecture de ladite information est effectuée en faisant tourner ledit disque optique dans une unité de disque (12) à une vitesse de rotation sélectionnée et en dirigeant un faisceau lumineux d'interrogation ayant une longueur d'onde de faisceau qui est comprise dans une plage choisie vers au moins une partie d'une zone coïncidant avec ledit substrat et ladite couche réfléchissante codée avec une information stockée sur elle sous la forme d'une pluralité de structures de données lisibles et à travers ladite matière réfléchissante pendant une durée de temps cumulée.

23. Procédé selon l'une quelconque des revendications 19 à 21, dans lequel ladite matière réfléchissante change en un état optiquement transparent, dans lequel une lecture effective de l'information peut être réalisée par la détection de réflexions optiques du rayonnement, et un état optiquement opaque (62) dans lequel, pour au moins une partie prédéterminée de ladite information, lesdites réflexions optiques de ladite partie sont suffisamment réduites pour empêcher la lecture de ladite information.

24. Procédé selon la revendication 23, dans lequel ledit faisceau d'interrogation est dirigé vers ladite zone pendant un intervalle de temps continu qui est suffisant pour provoquer ledit changement de l'état optique.

25. Procédé selon la revendication 23, dans lequel ledit faisceau d'interrogation est dirigé vers ladite zone pendant plusieurs intervalles de temps discrets, dans lequel tous lesdits intervalles de temps sont espacés les uns des autres dans le temps, et dans lequel aucun desdits intervalles n'est suffisant pour provoquer ledit changement d'état optique, mais une accumulation de durée desdits intervalles est suffisante pour provoquer ledit changement.

26. Procédé selon l'une quelconque des revendications 22 à 25, dans lequel ladite longueur d'onde du faisceau est d'environ 780 nanomètres (nm).

27. Procédé selon l'une quelconque des revendications 22 à 25, dans lequel ladite longueur d'onde du faisceau est d'environ 650 nanomètres (nm).

28. Procédé selon la revendication 23, dans lequel ladite étape consistant à diriger ledit faisceau d'interrogation vers ladite zone est réalisée en faisant avancer sélectivement ledit faisceau d'interrogation radialement à travers une surface située le plus à l'extérieur dudit disque optique jusqu'à ce que ledit faisceau lumineux d'interrogation interagisse avec ladite matière réactive pendant plusieurs intervalles de temps discrets, suffisants pour provoquer ledit changement d'état optique.

29. Procédé selon l'une quelconque des revendications 22 à 25, dans lequel ledit faisceau a une intensité d'environ 1 milliwatt (mW) de puissance.

30. Procédé selon la revendication 29, dans lequel ladite longueur d'onde du faisceau est d'environ 780 nanomètres (nm).

31. Procédé selon la revendication 22 ou la revendication 23, dans lequel ladite étape de direction oxyde volontairement ladite matière réactive.

32. Procédé selon l'une quelconque des revendications 19 à 21, dans lequel ladite matière réactive change entre un état optiquement transparent efficace pour lire les structures de données stockées en coïncidence avec ladite partie de ladite zone, et un état optiquement opaque (62) qui empêche la lecture d'au moins certaines desdites structures de données stockées en coïncidence avec ladite partie de ladite zone.

33. Procédé selon la revendication 22, dans lequel ladite matière réactive agit, dans un environnement ambiant contenant de l'oxygène, en réagissant avec l'oxygène afin de changer une transmission optique à partir de ladite zone en réponse à une irradiation pendant une durée de temps cumulée sous l'effet d'une lumière ayant une longueur d'onde de faisceau dans une plage sélectionnée.
